(19) Europäisches Patentamt / European Patent Office / Office européen des brevets

(11) **EP 4 571 184 B1**

(12) **EUROPEAN PATENT SPECIFICATION**

(45) Date of publication and mention
of the grant of the patent:
**01.04.2026 Bulletin 2026/14**

(21) Application number: **23216011.9**

(22) Date of filing: **12.12.2023**

(51) International Patent Classification (IPC):
**F22B 37/56** *(2006.01)*

(52) Cooperative Patent Classification (CPC):
**F22B 37/565; F22B 37/52; F22B 37/56;** Y02E 20/16

(54) **METHOD OF PRE-OPERATIONAL CLEANING OF WATER AND STEAM SYSTEMS IN COMBINED CYCLE POWER PLANTS AND COMBINED CYCLE POWER PLANT ARRANGED THEREFOR**

VERFAHREN ZUR PRÄOPERATIVEN REINIGUNG VON WASSER- UND DAMPFSYSTEMEN IN KOMBIKRAFTWERKEN UND DAFÜR EINGERICHTETES KOMBIKRAFTWERK

PROCÉDÉ DE NETTOYAGE PRÉ-OPÉRATIONNEL DE SYSTÈMES D'EAU ET DE VAPEUR DANS DES CENTRALES À CYCLE COMBINÉ ET CENTRALE À CYCLE COMBINÉ AGENCÉE POUR CELUI-CI

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**18.06.2025 Bulletin 2025/25**

(73) Proprietor: **GE Vernova Technology GmbH**
**5400 Baden (CH)**

(72) Inventor: **Antheaume, Olivier**
**5800 Baden (CH)**

(74) Representative: **Novagraaf Group**
**Chemin de l'Echo 3**
**1213 Onex / Geneva (CH)**

(56) References cited:
**EP-A1- 2 426 322      US-A1- 2008 236 616**
**US-A1- 2020 173 651**

**Description**

FIELD

The present disclosure relates to pre-operational cleaning of new or refurbished components in combined cycle power plants and, more particularly, to a method of pre-operational cleaning of water and steam systems in a combined cycle power plant.

BACKGROUND

A combined cycle power plant utilizes a gas turbine engine and a steam turbine engine in combination to produce power. In the combined cycle power plant, the gas turbine engine is thermally connected to the steam turbine engine through a heat recovery steam generator (HRSG). The HRSG is a non-contact heat exchanger that allows feed water for the steam generation process to be heated by otherwise wasted gas turbine engine exhaust gases. The HRSG may be a large duct with tube bundles interposed therein such that water conducted through the tube bundles is heated to steam by the exhaust gases passing through the duct.

Modern combined cycle power plants use a multi-pressure HRSG which may have three different operating pressures (high, intermediate, and low) with components to generate steam at the various pressures and temperatures. The HRSG may include, for example, a low pressure section, an intermediate pressure section, and a high pressure section, each of which may generally include one or more economizers, evaporators and/or superheaters. The steam at the respective pressure is used as vapor feed to the corresponding stages of the steam turbine system. The gas turbine system and the steam turbine system drive one or two generators that produce electrical power.

Used steam from the steam turbine system is exhausted into a condenser, where the steam condenses, and the condensate is then fed from the condenser back to the HRSG via one or more conduits with the aid of a condensate pump.

The purity of the steam in the operation of a power plant has to satisfy stringent requirements. It is important to avoid a situation, where particulate debris is entrained in the steam and may impair operation of the power plant or even cause damage to plant components. For example, particulate debris may plug steam screens or clog narrow steam passages. Particulate debris may cause erosion and impact damage to stationary and rotating components of the steam turbines and may also plug or damage the internal surfaces of steam valves used to control the flow of steam.

During fabrication and erection of a combined cycle power plant, contaminants such as weld spatter, swarf, welding electrode residues, mud, sand, dust, and the like may remain in the system despite all cautionary measures taken. The contaminants are sometimes present loosely, and sometimes they adhere to the inner walls of the plant parts.

Therefore, in typical prior art methods for the startup of new and refurbished steam turbine generator facilities, numerous methods have been employed to remove particulate contamination from the interior surface of steam-carrying equipment and piping, including the HRSG region, steam lines between the HRSG and the steam turbine system and steam lines leading to the condenser, and control valves therein. Generally, such steam-carrying components are blown out or flushed out before commissioning the gas turbine engine and before every first steam pulse of the steam turbine system to ensure that they are free of particulate contaminants before the startup.

Pre-operational cleaning methods of the art involve flushing the steam and water system components with treated water and chemical cleaning procedures which may include hot alkaline degreasing, acid cleaning, passivation, rinsing and/or air blow cleaning, followed by inspection of the drums and low point headers and hand cleaning or rinsing of any deposits therein. Only then will the gas turbine engine and entire combined cycle power plant be commissioned.

It is also known to perform a steam blow procedure wherein the steam generators and associated steam lines are blown using steam discharged to atmosphere via a temporary piping and silencer installed at the steam turbine isolation and control valves. The steam blows can be continuous or discontinuous (pulse blows) and are generally performed at low load with low exhaust pressure to reach the desired disturbance factors. Some other methods include combined steam load to atmosphere and to condenser via temporary piping. Steam dump to condenser in a normal bypass operation without reaching a high disturbance factor and without target validation of the cleaned water and steam system components has also been used, but is less efficient than required.

US 2009/0107532 A1 discloses a method for pre-operational cleaning of plant parts of a power plant, comprising routing a medium continuously in a closed flow circuit through one or more plant parts to be cleaned and testing the medium for a degree of purity of an operational plant part. Steam is extracted from a steam boiler device, and liquid obtained from the steam in the condenser is supplied to the operational plant part and is routed in a closed flow circuit for cleaning the plant parts via steam. To bypass the high-pressure stage of the steam turbine unit, a branch from the high-pressure steam line is provided for temporary cleaning facilities with a temporary steam line system and blow-out inserts and with a measuring device arranged between the blow-out inserts. The measuring device is a polished metal baffle plate, which is introduced into the steam line transversely with respect to the flow direction and which allows the degree of purity of the medium to be observed visually and judged, during the blow-out operation, by means of particle impacts impinging onto the baffle plate. The method requires installation of the temporary steam line system for performing the steam blow procedure. The temporary steam line system and the temporary blow-out facilities are to be removed for normal operation of the power plant. This increases workload, expense and time required for the pre-operational cleaning.

US 10 612 771 B2 discloses a method of pre-operational cleaning of water and steam systems in a combined cycle power plant including steam blow to a condenser with light pre-operational cleaning and using a temporary piping to first steam blow to atmosphere and then using another temporary piping to blow the steam to the condenser bypassing the bypass valves on the line going to condenser. The temporary piping and equipment is designed to allow base load or maximum 100% load operation. In order to monitor and confirm exhaust steam cleanliness, a target insertion device in the form of a highly polished metal plate is inserted into the steam blow exhaust and can be removed and examined to determine the continued presence of particulate contamination in the exhausting steam. The steam blow procedure is efficient and can be performed during the commissioning of the gas turbine engine. But the temporary piping, temporary equipment and temporary control required for the entire validation steam blow procedure greatly increase the corresponding configuration and reconfiguration workload, material requirements and costs. In addition, since the first steam blow is discharged to atmosphere, an atmospheric silencer must be provided and used at the exhaust point of the steam to atmosphere to avoid excessive noise pollution.

US 2020/173651 A1 discloses a combined cycle power plant is provided, comprising: a gas turbine engine for generating power; a heat recovery steam generator (HRSG) fluidly connected to the gas turbine engine for receiving high energy exhaust gas produced from the generation of power in the gas turbine engine and configured for producing steam from the high energy exhaust gas; a steam turbine system fluidly connected to the HRSG via steam lines for receiving steam produced in the HRSG and configured for producing additional power from the steam; a condenser coupled to the steam turbine system for condensing used steam output from the steam turbine system and a condensate system for returning condensate from the condenser to the HRSG; permanent operational bypass lines fluidly connected between the steam lines and the condenser and arranged to bypass the steam turbine system; and a control system for controlling normal operation of the gas turbine system, the HRSG, the steam turbine system, and the condenser for generating power under varying operating conditions, the control system being further configured to perform a pre-operational cleaning of water and steam systems in the combined cycle power plant by: firing the gas turbine engine and commissioning the gas turbine engine; while the gas turbine engine is being commissioned, performing a validation steam blow procedure including a steam blow operation, wherein steam is generated in the HRSG and blown at high velocities, temperatures and cleaning force ratio conditions through a portion of a closed flow circuit for cleaning the steam carrying parts of the HRSG and steam lines connecting the HRSG to the steam turbine, wherein the steam is routed to bypass the steam turbine system via the operational bypass lines and temporary bypass piping, and is discharged to the condenser, and monitoring and validating cleanliness of selected steam blown steam lines.

Conventional methods for pre-operational cleaning of steam generation equipment and piping use large temporary piping arrangement with the corresponding configuration and reconfiguration workload, manpower needed and material costs; they perform steam blow to atmosphere with the need for atmospheric silencers and large amount of demineralized water; they cannot be carried out in parallel to a normal commissioning of the gas turbine engine; and/or they are time-consuming and cost-intensive to implement.

It is an object of the present disclosure to provide a new method of pre-operational cleaning using validation steam blow of water and steam systems in combined cycle power plants which overcomes one or more of the above-mentioned deficiencies of the conventional pre-operational cleaning methods. The method should allow for efficient cleaning of the steam and water systems and may preferably be performed at least in part in parallel to the commissioning of the gas turbine system to facilitate reducing fired hours and fuel consumption in the gas turbine system and demineralized water consumption for the pre-operational cleaning. In addition, the method should present no safety concerns and no visual pollution and should meet noise and emission compliances.

It is a further object of the present disclosure to provide a combined cycle power plant arranged for performing such a pre-operational cleaning.

BRIEF DESCRIPTION

In order to meet the above objects, according to one aspect of the invention, a method of pre-operational cleaning of water and steam systems in a combined cycle power plant is provided. The combined cycle power plant includes a gas turbine engine, a steam turbine system, a condenser, and a heat recovery steam generator (HRSG). The method comprises: performing a pre-operational initial flushing and chemical cleaning operation on the water and steam system of the finally constructed combined cycle power plant; firing the gas turbine engine and commissioning the gas turbine engine; while the gas turbine engine is being commissioned, performing a validation steam blow procedure including a steam blow operation, wherein steam is generated in the HRSG and blown at high velocities, temperatures and cleaning force ratio conditions through a portion of a closed flow circuit for cleaning steam carrying parts of the HRSG and steam lines connecting the HRSG to the steam turbine, wherein the steam is routed to bypass the steam turbine system via permanent operational bypass lines, without using any temporary piping, and is discharged to the condenser; and monitoring and validating cleanliness of selected steam blown steam lines. The steam blow operation is performed, while the gas turbine engine is operated at base load, and the steam-carrying parts of the HRSG, the steam lines, and the operational bypass lines including bypass valves to be steam-blown are each designed for a cleaning force ratio *CFR* of at least 1.1, wherein the cleaning force ratio *CFR* is calculated as:

$$CFR = \left(\frac{Q_c}{Q_{max}}\right)^2 \times \frac{(PV)_c}{(PV)_{max}} \times \frac{P_{max}}{P_c} \quad,$$

wherein $Q_c$ is a calculated flow during cleaning, $Q_{max}$ is a maximum load flow, $(PV)_c$ is a pressure-specific volume product during cleaning, $(PV)_{max}$ is a pressure specific volume product at maximum load flow, $P_{max}$ is a pressure at maximum load flow, and $P_c$ is a pressure during cleaning.

In the method of present invention, the normal commissioning of the gas turbine system is performed in parallel to the validation blow procedure. In particular, the normal and full gas turbine commissioning activities can be performed driving the gas turbine in bypass operation to Full Speed No Load (FSNL) conditions, performing synchronization and HRSG safety valve testing, loading the gas turbine system up to base load for combustion tuning with the fuel gas strainers installed, and other common commissioning activities. The power plant may start up as per normal configuration without any temporary or manual control. No temporary piping or lines are required such that configuration and reconfiguration of the plant for performing the pre-cleaning is minimal.

A temporary pipeline or line is understood as meaning, in particular, a steam pipeline or line that is required and to be installed for the cleaning process only, e.g., for bypassing the steam turbine system. In contrast, a permanent operational pipeline or line is required and installed for the normal operation, e.g., for bypassing the steam turbine system under specific operating conditions, such as load rejection. Since no such temporary piping, temporary compressors, temporary flow-out means and temporary control are required by the method of present invention, the efforts, time and costs of personnel and material for performing the pre-cleaning may be greatly reduced.

In addition, the validation blow to condenser methodology avoids blowing the steam to atmosphere, as is done in some conventional pre-cleaning methods. Thus, demineralized water consumption to maintain cycle water quality, to mitigate noise, and to minimize visual pollutions may be limited. In addition, performing the commissioning of the gas turbine system in parallel to the validation blow procedure facilitates limiting fired hours and fuel consumption in the gas turbine system and meeting emission compliance during the steam blow at high load. There are no safety concerns as the plant is in normal operation including all normal regulation and protection means. Efficient cleaning may be achieved with thermal cycling and maximum cycled temperatures. Early steam quality is obtained due to the extensive pre-operational cleaning with the condenser included in the steam flow path, wherein the cycle is under vacuum and running at high loads.

With the new generations of gas turbine systems, the gas turbine engine exhaust temperature is higher, and the method does not have limitation with some dry steam sections in the HRSG and is also not limited by the design temperature of any temporary piping, which might require additional attemperation. With the new generation of gas turbine engines, the steam flow is getting much higher, and traditional pre-cleaning methods represent significant demineralized water consumption. As a result, the temporary piping and installation in conventional systems is also getting progressively larger.

In the method of present invention, the pre-operational initial flushing and chemical cleaning operation may include any commonly known chemical cleaning procedures, including open or closed flushing, hot degreasing, acid cleaning, passivation and rinsing. The chemical cleaning is done on the complete steam and water system, including HRSG drums, economizers, evaporators, superheaters and reheater, balance of plant steam lines, auxiliary steam lines, feed water lines and the condensate system. In some particular cases, the acid cleaning can be limited to the HRSG water and steam system if the steam piping from HRSG to steam turbine is mechanically cleaned by another method (e.g., shot-blasted after prefabrication and installed cleaned or hydro-blasted and inspected after installation). Once the chemical cleaning is completed, extended inspection at various locations including low points and HRSG collectors may be performed, and the locations may be hydrolazed using jets of high-pressure water for cleaning to remove any remaining solid deposits from chemical cleaning. Together with the steam blow procedure, all steam generating plant contaminants, such as sand, dust, mud, weld splatter, swarf, welding electrode residuals, and the like, which may remain in the system after fabrication and erection of the power plant, may be efficiently removed prior to initial start-up of the plant.

According to the invention, the steam blow operation is advantageously performed, while the gas turbine engine is operated at base load or maximum load conditions. The steam-carrying parts of the HRSG, the steam lines and the operational bypass lines (including bypass valves) that are to be steam blown are each designed for a cleaning force ratio CFR of at least 1.1 or even at least 1.2. During the commissioning, the gas turbine engine is loaded to base load, in order to achieve the desired and required CFR to provide for efficient cleaning of the steam system.

The overall steam blow procedure and calculation may be greatly simplified, when it is well-integrated in the initial design and concept processes. The various steam blow cases may be calculated by engineers at the initial engineering and procurement phase of a project for the construction of a new combined cycle power plant to allow for a sufficient CFR on the HRSG and steam lines. The steam blow cases may be included in the bypass functional specification among other normal operation scenarios to allow the pipeline and bypass suppliers to size the bypass lines and bypass valves accordingly. Then, the need for specific equipment for the validation blow procedure may be limited.

In order to determine what the steam bypass capability shall be for the validation steam blow, it may be checked at which pressure each piping section shall be operated to exceed the expected CFR with the steam flow available, when operating the gas turbine engine at base load on steam bypasses under the expected realistic ambient conditions for the steam blow. For this purpose, usually the normal ambient conditions may be considered and are generally acceptable.

In preferred applications of any above-mentioned version of the method, the HRSG may have a plurality of pressure stages including a high-pressure (HP) stage, an intermediate-pressure (IP) stage, a low-pressure (LP) stage, and a reheater. The steam turbine system may include an HP steam turbine, an IP steam turbine, and an LP steam turbine. The steam lines to be steam blown may include at least an HP steam line for supplying HP steam from the HP stage of the HRSG towards the HP steam turbine, an IP steam line connecting the IP stage of the HRSG to the reheater, a hot re-heat (HRH) line for supplying IP steam from the reheater towards the IP steam turbine, a cold re-heat (CRH) line for receiving used HP steam from the HP steam turbine and supplying the used HP steam to the reheater, an operational HP bypass line arranged between the HP steam line and the CRH line, an operational HRH bypass line arranged between the HRH line and the condenser, and an operational LP bypass line arranged between the LP steam line and the condenser. Designing the permanent operational piping line may then include sizing and arranging at least the HP steam, IP steam, HRH, CRH, and LP steam lines and the HP, HRH, and LP bypass lines for a cleaning force ratio CFR of at least 1.1, preferably at least 1.2.

In any above-mentioned embodiment, the method may further comprise providing at least some of the bypass valves in the operational HP, HRH, and LP bypass lines with modulating sacrificial trims designed to increase the flow coefficient (CV) capability of the bypass valves to support a cleaning force ratio CFR of at least 1.2 for single HRSG plant configurations and at least 1.03 for multiple HRSG plant configurations.

Sacrificial trims may be installed in the bypass valves during the validation blow procedure only to prevent operational trims from being damaged and to increase the flow coefficient capability of the bypass valves. The sacrificial trims may have a reduced durability and may be removed from the bypass valves again when the validation steam blow procedure is completed. Permanent trims, which are included in the bypass valves for normal operation, may be sized based on the maximum loading cases except the steam blow case and may have greater strength and durability.

In some embodiments, when sacrificial trims are designed, a margin of about 10%, for example, can be added on the required valve flow coefficient CV of the sacrificial trim in order to make sure that the required cleaning force ratio CFR can be met in the true operating conditions at site. For the HP bypass line, the sacrificial trim which provides the maximum CV that the valve body can accommodate can be provided in order to be able to perform the validation blow under the base load conditions. In some embodiments, the sacrificial trims may consist of a piston with an associated gasket and a cage having, e.g., an increased number and/or size of holes to allow for higher volumetric flows and velocities of the steam passing therethrough.

When designing the HP bypass line and the HP bypass valve, the bypass attemperation flows, which may be required, may also be taken into account. The temperature set point of the HP bypass attemperation may be set based on the expected CRH pressure, as per normal bypass attemperation control, but using the expected CRH pressure at the time of the steam blow.

Any above-mentioned embodiment of the method may further comprise positioning take-off connections of the operational HP, HRH, and LP bypass lines as close to the steam turbine system as can be accomplished, in close vicinity and just upstream of the control and isolation valve assemblies of the HP, IP, and LP steam turbines. "As close as can be accomplished" means reasonably close to the steam turbine system to avoid the bypass lines being affected by the turbine building, the type of the condenser, and the like. The bypass lines will not be installed in the HRSG area, in particular not on the HRSG pipe rack, but rather closer to the steam turbine system. The HRH and LP bypass lines can be installed directly in the steam turbine area. The HP bypass line will not be installed directly in the steam turbine area, but as close as possible and reasonable thereto. The non-return valve on the CRH line and a downstream connection of the HP bypass line to the CRH line should also be positioned as close to the HP steam turbine as can be accomplished. In this manner, longer sections of the steam-carrying parts and steam lines may be cleaned by steam blowing.

In any above-mentioned embodiment, the method may further comprise installing target inserts, preferably in the form of mirror or highly polished steel plates, at least in the HRH and LP steam lines. The target inserts are configured and arranged to allow for online target inspection and monitoring of cleanliness at the steam temperatures and pressure operating conditions during the validation blow procedure. The target inserts may visually show impacts of debris entrained by the steam blow.

In any above-mentioned embodiment, the method may further comprise installing steam flow meters in relevant portions of the steam carrying parts of the HRSG, steam lines and operational bypass lines and online calculating of the CFR in the relevant portions based on steam flow measurements of the steam flow meters during the validation steam blow procedure.

The type of steam flow meter can be a venturi or nozzle type, for example. The CFR calculations may be included as part of the normal plant control software to verify the cleaning ratio during validation blows.

Any above-mentioned embodiment of the method may further comprise providing inspection/cleaning ports in non-steam blown sections of the steam lines; and inspecting and cleaning, if necessary, the non-steam blown sections after the validation blow procedure is completed. The cleaning may be performed by rinsing using demineralized water, for example. It may be ensured that all critical paths, dead legs, and the like are substantially free of contaminants.

In some favorable embodiments of any above-mentioned method, at least some of the take-off connections of the HP, HRH, and LP bypass lines may be provided with a T connection which is straight to the respective bypass line and not straight to the respective steam turbine section in order to reduce accumulation of debris in dead legs upstream of the respective steam turbine section. This may save time for inspecting and cleaning on the critical paths. Some of the normally required inspection and cleaning ports may then be omitted. This approach may be particularly applicable for configurations without steam isolation valves and sections upstream of steam isolation valves. This approach may also be of particular interest in the case of HP steam lines, where the option of adding inspection flanges or ports is more challenging. In addition, recent studies have indicated that a straight line to the bypass might limit erosion of the steam turbine valves during long-term plant operation.

Any above-mentioned embodiment of the method may further be applied to a combined cycle power plant including a multi-unit configuration comprising a single steam turbine system, a first unit including a first HRSG and a first gas turbine engine, and a second unit including a second HRSG and a second gas turbine engine. The method may then preferably comprise performing the validation blow procedures independently between the units. This may be readily accomplished since common sections of the units are not included. Preferably, the validation blow procedures for the first and the second unit are performed one after the other. In favorable embodiments, the validation blow procedure on one of the first and second unit may be performed, while simultaneously inspecting and cleaning dead legs following the validation blow procedure in the other unit. This may save time for completing the pre-operational cleaning.

In some embodiments of the method applied to the combined cycle power plant including a multi-unit configuration, the method may comprise performing validation blow in one of the first and second units, while using at least one bypass line and bypass valve in the other unit to route the validation steam therethrough. This may help avoid oversizing the bypass valves in the bypass lines.

As an alternative, an HP steam line connection to the HRH warming line might be used for multi-unit plant configurations in order not to oversize the HP bypass valve. During validation steam blowing both the HP bypass line and the HP to HRH warming line may be used to reduce the HP bypass line pressure.

In some embodiments of any above-mentioned method applied to the combined cycle power plant including a multi-unit configuration, in cases where the HP bypass valve may not be capable to reach the sufficient CFR on the HP steam line or to limit the HP and CRH non-blown sections, a modified embodiment of the method may comprise installing a temporary jumper with an optional throttling device from the HP steam turbine valves of the HP steam turbine to a non-return valve on the CRH line and sizing the HRH bypass valves to allow for the required CFR of at least 1.03 on the HRH steam systems. The throttling device may be used on the temporary piping to limit the CFR on the HP steam system if required. Only limited temporary piping common for both units of the multi-unit plant configuration is used to avoid using the HP bypass lines and valves of both the units for the steam blow operation.

In addition, when temporary piping is used, the HP steam terminal attemperator, if used, may be designed to allow attemperation of the HP steam prior to entering the CRH steam line for the maximum steam blow conditions. When no HP terminal attemperator is available, a specific port may be provided on the HP steam line to allow temporary attemperation to be connected during the validation blow. Apart from these aspects, no temporary piping or equipment is used as such in each of the first and second units of the multi-unit configuration of the combined cycle power plant.

According to another aspect of the present invention, in order to solve the objects mentioned above, a combined cycle power plant is provided, which comprises: a gas turbine engine for generating power; a heat recovery steam generator (HRSG) fluidly connected to the gas turbine engine for receiving high energy exhaust gas produced from the generation of power in the gas turbine engine and configured for producing steam from the high energy exhaust gas; a steam turbine system fluidly connected to the HRSG via steam lines for receiving steam produced in the HRSG and configured for producing additional power from the steam; a condenser coupled to the steam turbine system for condensing used steam output from the steam turbine system and a condensate system for returning condensate from the condenser to the HRSG; permanent operational bypass lines fluidly connected between the steam lines and the condenser and arranged to bypass the steam turbine system; and a control system for controlling normal operation of the gas turbine system, the HRSG, the steam turbine system, and the condenser for generating power under varying operating conditions, the control system being further configured to perform a pre-operational cleaning of water and steam systems in the combined cycle power plant by: firing the gas turbine engine and commissioning the gas turbine engine; while the gas turbine engine is being commissioned, performing a validation steam blow procedure including a steam blow operation, wherein steam is generated in the HRSG and blown at high velocities, temperatures and cleaning force ratio conditions through a portion of a closed flow circuit for cleaning the steam carrying parts of the HRSG and steam lines connecting the HRSG to the steam turbine, wherein the steam is routed to bypass the steam turbine system via the operational bypass lines, without using any temporary piping, and is discharged to the condenser, and monitoring and validating cleanliness of selected steam blown steam lines. The steam blow operation is performed, while the gas turbine engine is operated at base load, and the steam-carrying parts of the HRSG, the steam lines, and the operational bypass lines including bypass valves to be steam-blown are each designed for a cleaning force ratio *CFR* of at least 1.1, wherein the cleaning force ratio *CFR* is calculated as:

$$CFR = \left(\frac{Q_c}{Q_{max}}\right)^2 \times \frac{(PV)_c}{(PV)_{max}} \times \frac{P_{max}}{P_c} \quad ,$$

wherein $Q_c$ is a calculated flow during cleaning, $Q_{max}$ is a maximum load flow, $(PV)_c$ is a pressure-specific volume product during cleaning, $(PV)_{max}$ is a pressure specific volume product at maximum load flow, $P_{max}$ is a pressure at maximum load flow, and $P_c$ is a pressure during cleaning.

The combined cycle power plant is designed for efficient final cleaning of the water and steam system from contaminants within a short period of time in preparation to normal operation of the power plant, e.g., after the power plant has been newly installed or serviced, in parallel to the commissioning of the gas turbine system without requiring any temporary piping, installation and control and corresponding configuration and reconfiguration, thereby achieving the advantages mentioned above in connection with the method of the present invention. The above described further embodiments of the method and associated effects and advantages apply equally to the combined cycle power plant. Most preferred embodiments of the combined cycle power plant of the present invention are as follows:

The control system are configured to perform the steam blow operation, while operating the gas turbine engine at base load, i.e., maximum load conditions, and the operational piping of the HRSG, steam lines, and operational bypass lines including bypass valves to be steam blown are each designed for a cleaning force ratio CFR of at least 1.1 or even at least 1.2.

In preferred embodiments of any above-mentioned type of combined cycle power plant, the HRSG may have a plurality of pressure stages including a high-pressure (HP) stage, an intermediate-pressure (IP) stage, a low-pressure (LP) stage, and a reheater. The steam turbine system may include an HP steam turbine, an IP steam turbine, and an LP steam turbine. The steam lines may include an HP steam line for supplying HP steam from the HP stage of the HRSG towards the HP steam turbine, an IP steam line connecting the IP stage of the HRSG to the reheater, a hot re-heat (HRH) line for supplying IP steam from the reheater towards the IP steam turbine, a cold re-heat (CRH) line for receiving used HP steam from the HP steam turbine and supplying the used HP steam to the reheater, an operational HP bypass line arranged between the HP steam line and the CRH line, an operational HRH bypass line arranged between the HRH line and the condenser, and an operational LP bypass line arranged between the LP steam line and the condenser. At least the HP steam, IP steam, HRH, CRH, and LP steam lines and the HP, HRH, and LP bypass lines may be sized and arranged for a cleaning force ratio CFR of at least 1.1, and preferably at least 1.2.

In preferred embodiments of the combined cycle power plant, at least some of the bypass valves in the operational HP, HRH, and LP bypass lines may be equipped for the validation steam blow procedure with modulating sacrificial trims designed to increase the flow coefficient CV capability of the bypass valves so as to support a cleaning force ratio CFR of at least 1.2 for single HRSG plant configurations and at least 1.03 for multiple HRSG plant configurations. The sacrificial trims are installed to prevent the operational trims from being damaged during the validation blow procedure and to increase the flow coefficient capability of the bypass valves that may reduce the durability in some cases. The sacrificial trims may be removed from the bypass valves when the validation steam blow procedure is completed.

In any above-mentioned embodiment of the combined cycle power plant, the take-off connections of the operational HP, HRH, and LP bypass lines may be preferably positioned as close to the steam turbine system as can be accomplished, i.e., as close as possible and reasonable thereto, more remote from the HRSG area than the steam turbine area, not on the HRSG pipe rack and not directly in the steam turbine area, but in close vicinity and just upstream of the control and isolation valve assemblies of the HP, IP, and LP steam turbines. An isolation valve on the CRH line, if any, and a downstream connection of the HP bypass line to the CRH line may also be positioned as close to the HP steam turbine as can be accomplished, in order to allow for longer sections of operational piping to be steam blown.

In any above-mentioned embodiment of the combined cycle power plant, for the validation steam blow procedure, target inserts, preferably in the form of mirror or highly polished steam blades, may be installed in the HRH and LP steam lines 49, 41, respectively, and/or other steam-carrying parts and lines, wherein the target inserts may be configured and arranged to allow for online target inspection and monitoring of cleanliness at the steam temperatures and pressure operating conditions during the validation blow procedure.

In any above-mentioned embodiment of the combined cycle power plant, steam flow meters may be provided in relevant portions of the operational piping of the HRSG, the steam lines, and/or the bypass lines to be steam blown, and the control system may be configured to calculate the CFR in the relevant portions based on steam flow measurements of the steam flow meters during the validation steam blow procedure. The calculated CFR in the relevant portions may be presented to an operator of the power plant on a graphic interface of the control system 9 to allow the operator to verify that the required CFR is achieved.

In any above-mentioned embodiment of the combined cycle power plant, inspection/cleaning ports may be provided in non-steam blown sections of the steam lines to provide access for inspection and cleaning of the non-steam blown sections. Such sections may be acid-cleaned and hydrolazed and inspected using borescopes, robotic cameras, and the like before the gas turbine engine is then fired for normal operation. Dead legs around the steam turbine system may be inspected during and after the steam blow procedure. Accumulated debris in dead legs may be removed by rinsing.

In favorable further embodiments of any above-mentioned combined cycle power plant, at least some of the take-off connections of the HP, HRH, and LP bypass lines may be provided with a T connection which is straight to the respective bypass line and not straight to the respective steam turbine section to reduce accumulation of debris in dead legs upstream of the respective steam turbine section. This may save time for inspecting and cleaning on the critical paths and allow to dispense with some of the inspection/cleaning ports. In addition, erosion of steam turbine valves during long-term plant operation may be reduced.

In preferred applications of any above-mentioned embodiments, the combined cycle power plant may include a multi-unit configuration comprising a single steam turbine system, a first unit including a first HRSG and a first gas turbine engine, and a second unit including a second HRSG and a second gas turbine. In the multi-unit configuration, the control system may be configured to perform the validation blow procedures independently between the units and one after the other. In particular, the control system may be configured to perform the validation blow procedure on one of the first and second units, while dead legs in the other unit are simultaneously inspected and cleaned following the validation blow procedure therein.

In some embodiments of any above-mentioned combined cycle power plant, in order not to oversize the bypass valves and/or to avoid installation of sacrificial trims in the bypass valves, the control system may be configured to perform a validation steam blow procedures in one of the first and second units using at least one bypass line and bypass valve in the other unit to route the validation steam flow therethrough.

As an alternative, an HP steam line connection to the HRH warming line may be used for multi-unit plant configurations in order not to oversize the HP bypass valve.

In some further embodiments of the combined cycle power plant, a temporary jumper may be installed between the HP steam turbine valves of the HP steam turbine and a non-return valve on the CRH line in order to route the HP steam therethrough and avoid using the HP bypass lines and HP bypass valves. The HRH bypass valves may be sized to allow for a CFR of at least 1.1 on the HP and HRH steam systems. These embodiments are particularly advantageous in applications where the HP bypass valves are not capable of reaching the sufficient CFR on the HP steam line or to limit the HP and CRH non-blown sections.

These and other advantages and features of the present invention will become more apparent from the following description taken in conjunction with the drawings.

BRIEF DESCRIPTION OF THE DRAWINGS

The subject matter, which is regarded as the invention, is particularly pointed out and distinctly claimed in the claims at the conclusion of the specification. The foregoing and other features and advantages of the invention are apparent from the following detailed description taken in conjunction with the accompanying drawings, wherein:

Fig. 1 is a process flow schematic of an embodiment of the present invention to accomplish pre-operational cleaning using validation steam blow of water and steam systems in a combined cycle power plant in a single HRSG configuration;

Fig. 2 is a process flow schematic of an embodiment of the present invention to accomplish pre-operational cleaning using validation steam blow of water and steam systems in a combined cycle power plant having a multi-HRSG configuration with isolation valves;

Fig. 3 is a process flow schematic for an alternative embodiment of the combined cycle power plant in a multi-unit configuration, similar to Fig. 2, illustrating a validation flow path with a temporary jumper from the high-pressure steam turbine valves to the cold re-heat line in a multi-HRSG configuration of the combined cycle power plant; and

Figs. 4 and 5 are process flow schematics of a combined cycle power plant in the multi-unit configuration illustrating further embodiments of the validation steam blow procedure according to present invention using bypass of both units to avoid oversizing the bypass valves.

DETAILED DESCRIPTION

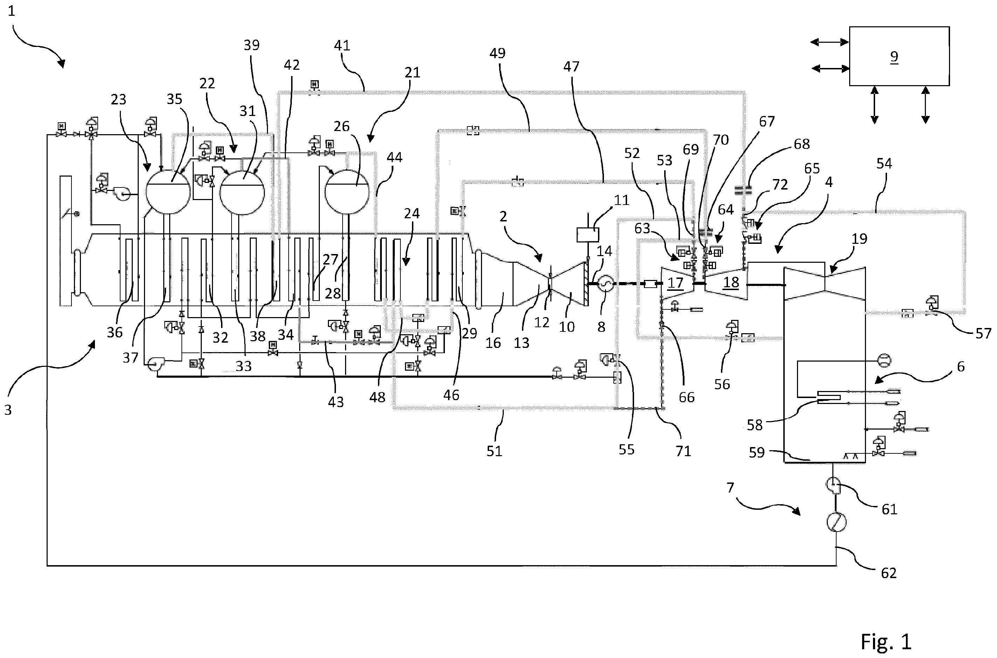

Referring now to the drawings, and in particular to Fig. 1, a combined cycle power plant 1, which may be referred to simply as power plant 1 in the following, is provided. The power plant 1 includes a gas turbine engine 2 for generating power; a heat recovery steam generator (HRSG) 3 fluidly connected to the gas turbine engine 2 to receive high energy exhaust gas produced from the generation of power in the gas turbine engine 2 and configured for producing steam from the high energy exhaust gas; a steam turbine system 4 fluidly connected to the HRSG 3 via steam lines to receive steam produced in the HRSG and configured for producing additional power from the steam; a condenser 6 coupled to the steam turbine system 4 for condensing used steam output from the steam turbine system 4 and coupled to a condensate system 7 for returning condensate from the condenser 6 to the HRSG 3; a generator 8 which is driven by the steam turbine system 4 and the gas turbine engine 2 to produce electrical power; and a control system that is only schematically shown in the form of a block 9 in Fig. 1 and that is configured for controlling normal operation of the gas turbine engine 2, the HRSG 3, the steam turbine system 4, and the condenser 6 for generating power under varying operating conditions. As is further explained below, the control system 9 is further configured to perform a pre-operational cleaning of water and steam systems in the combined cycle power plant 1.

The gas turbine engine 2 includes a compressor 10 that receives air through an inlet 11 and compresses the air; a combustor 12 that receives compressed air from the compressor 10 and a flow of fuel, e.g., natural gas, from a fuel source (not shown), mixes the compressed air and fuel and combusts the mixture to produce the high energy exhaust gas; and a turbine section 13 that receives the flow of high energy exhaust gas from the combustor 12. In the turbine section 13, the high energy exhaust gas is expanded, and thermal energy of the exhaust gas is converted into kinetic energy that drives a shaft 14. The mechanical power of the shaft 14 drives the compressor 10 and an external load, such as the electrical generator 8 and the like. The flow of high energy exhaust gases is delivered from the turbine section 13 through an exhaust duct 16 to the HRSG 3. In the illustrated exemplary embodiment of the power plant 1, the gas turbine engine 2, the steam turbine system 4, and the generator 8 are arranged on a single shaft 14, but other configurations with separate shafts and external loads may also be used.

The steam turbine system 4 includes, in the illustrated exemplary embodiment of the power plant 1, a high-pressure (HP) steam turbine 17, an intermediate-pressure (IP) steam turbine 18, and a low-pressure (LP) steam turbine 19 with multiple steam admission points at the different pressures. The LP steam turbine 19 is coupled to the condenser 6 to exhaust used steam, which was used to produce power, to the condenser 6.

The HRSG 3 is a counter-flow heat exchanger arranged to heat feedwater that passes through the HRSG 3 using the high energy exhaust gases received from the gas turbine engine 2 via the exhaust duct 16. The HRSG 3 is associated with the steam turbine system 4 and includes a corresponding plurality of pressure stages, including an HP stage 21, an IP stage 22, and an LP stage 23, and a reheater 24 to generate steam at the various pressures and temperatures. The steam is used as vapor feed to the respective stages of the steam turbine system 4.

Each of the HP, IP, and LP stages 21, 22, 23 of the HRSG 3 may generally include one or more drums, economizers, evaporators, OT (once-through) section, and/or superheaters. For example, the HP stage 21 may include an HP drum 26, an HP economizer 27, an HP evaporator 28, and one or more HP superheaters 29. Similarly, the IP stage 22 may include an IP drum 31, an IP economizer 32, an IP evaporator 33, and an IP superheater 34. The LP stage 23 may include an LP drum 35, an LP economizer 36, an LP evaporator 37, and an LP superheater 38. The economizers, evaporators, and superheaters of the HP, IP, and LP stages 21, 22, 23 of the HRSG 3 and the reheater 24 are arranged as tubes or tube bundles in the interior of the HRSG 3 such that the high energy exhaust gases passing through the HRSG 3 may transfer heat to the fluids (feedwater or steam) circulating through the tubes or tube bundles. Although the multi-pressure HRSG 3 having the configuration shown in Fig. 1 is a preferred embodiment of a steam generating facility in the combined cycle power plant 1, other configurations of an HRSG and other steam generating equipment, like steam boiler devices of different types and the like, may be used.

As may be seen in Fig. 1, the power plant 1 includes a plurality of steam lines arranged to provide steam generated in the HRSG 3 to the steam turbine system 4. For example, the plurality of steam lines may include an LP steam transfer line 39 fluidly coupled between the LP drum 35 and the LP superheater 38 and an LP steam line 41 fluidly coupled between the LP superheater 38 and the LP steam turbine 19 to supply LP steam thereto. The IP stage 22 of the HRSG 3 may include an IP steam transfer line 42 fluidly coupled between the IP drum 31 and the IP superheater 34 and an IP steam line 43 fluidly connecting the IP superheater 34 to the reheater 24. Another steam line (not numbered in Fig. 1) may be used for transferring IP steam from the IP drum 31 back to the LP drum 35 if required. The HP stage 21 of the HRSG 3 may include an HP steam transfer line 44 fluidly coupled between the HP drum 26 and the HP superheater 29, an HP steam transmission line 46 fluidly connecting different sections of the HP superheater 29, if any, and an HP steam line 47 fluidly coupled between the HP superheater 29 and the HP steam turbine 17 for supplying HP steam thereto.

In addition, the reheater 24 may include a reheater steam transfer line 48 fluidly connecting different sections of the reheater 24, if any, a hot re-heat (HRH) line 49 fluidly coupled between an output of the reheater 24 and an input of the IP steam turbine 18 for supplying IP steam thereto, and a cold re-heat (CRH) line 51 fluidly coupled at one end to an input of the reheater 24 and the IP steam line 43 and at the other end to an output of the HP steam turbine 17 for receiving used HP steam from the HP steam turbine 17. At least some of the steam lines 39-51 may include an isolation valve and/or a control valve for blocking or regulating steam flow therethrough.

The power plant 1 further includes a permanent bypass system including a number of permanent operational steam bypass lines which may be used in normal operation, such as during load rejection, to supply the steam generated in the HRSG 3 to the condenser 6 bypassing the steam turbine system 4. In particular, the plurality of operational bypass lines may include an HP bypass line 52, an HRH bypass line 53, and an LP bypass line 54. The HP bypass line 52 is fluidly coupled between the HP steam line 47 and the CRH line 51 and includes an HP bypass valve 55 installed thereon to control HP bypass steam flow therethrough. The HRH bypass line 53 is fluidly coupled between the HRH line 49 and the condenser 6 and includes an HRH bypass valve 56 installed thereon to control IP bypass steam flow therethrough. The LP bypass line 54 is fluidly coupled between the LP steam line 41 and the condenser 6 and includes an LP bypass valve 57 installed thereon to control LP bypass steam flow therethrough.

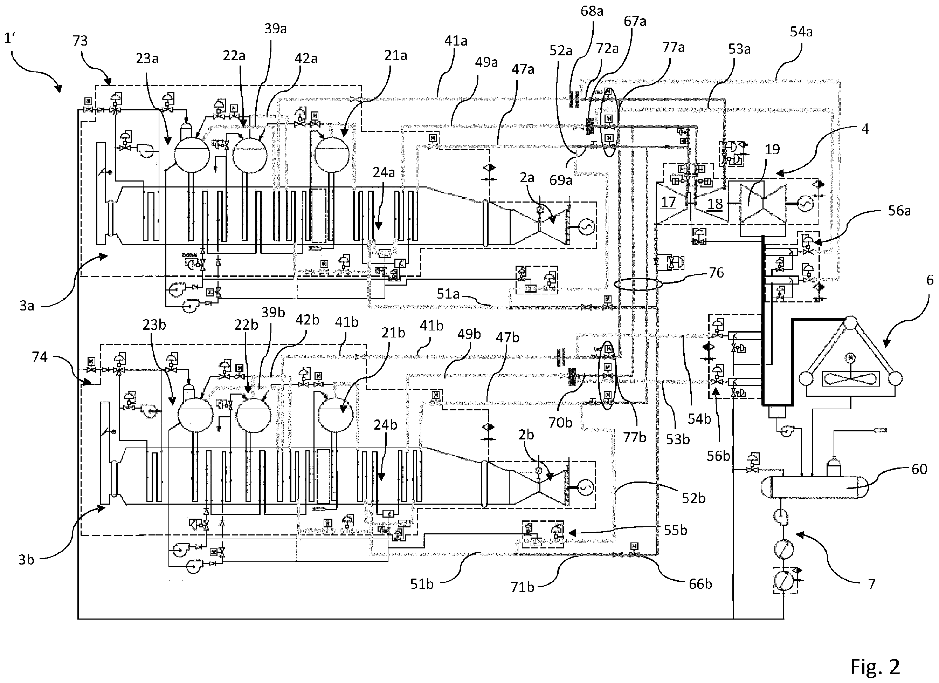

The condenser 6 is a large heat exchanger which is coupled to the steam turbine system 4, in particular the LP steam turbine 19, to receive used steam therefrom and which is arranged to cool down the used steam to condense it to water. Although several types of condensers are known, a common design contains a large number of small diameter tubes 58 through which cooling water is passed. The steam condensate from the condenser may fall into a hotwell 59 situated at the bottom of the condenser and/or may be provided to a condensate tank 60 (see Fig. 2). The condensate system 7 includes a condensate pump 61 and a condensate line 62. The condensate pump 61 returns the steam condensate from the condenser 6 to the HRSG 3 by means of the condensate line 62. Strainers (not shown) may be arranged at the suction side of the condensate pump 61 to remove particulate contamination from the steam condensate fed to the condensate pump 61 from the condenser hotwell 59 or the condensate tank 60 (Fig. 2) to prevent damage to the condensate pump 61 and other components of the condensate system 7. While a liquid cooled de-aerating condenser is shown in the embodiment of Fig. 1, any suitable condenser type may be used, including an air-cooled condenser which is schematically shown in the embodiment of Fig. 2.

In normal operation, the gas turbine engine 2 generates mechanical power that is converted into electrical power by the generator 8. The steam turbine system 4 may generate additional power from the steam received from the HRSG 3. Used steam from the steam turbine system 4 is condensed in the condenser 6 and returned to the HRSG 3 via the condensate system 7. Depending on the load requirements, one or more of the HP, IP and/or LP steam turbines 17, 18, 19 may not be used. Then, the respective steam turbine section may be bypassed using the operational HP, HRH, and LP bypass lines 52, 53, 54. Control and stop valve assemblies 63, 64, 65 are arranged at the inlets of the HP, IP, and LP steam turbines 17, 18, 19 to stop, open and control steam flow to the respective steam turbine stage. An isolation valve 66 is arranged on the CRH line 51 (e.g., in CRH line section 71) downstream of the outlet of the HP steam turbine 17.

During fabrication and erection or during refurbishing or servicing of the combined cycle power plant 1, contaminants, such as mud, sand, dust, weld spatter, swarf, welding electrode residuals, splinters, and other particulate contaminants, may remain in the system. To prevent contamination and damage of the steam turbine components during operation, all steam-carrying and water-carrying plant parts of the HRSG 3, the condenser 6 and the condensate system 7, the steam lines connecting the HRSG 3 to the steam turbine system 4 and to the condenser 6, and the operational bypass lines 52, 53, 54 must be freed of such contamination particles. To this end, a method of pre-operational cleaning of water and steam systems in a combined cycle power plant is provided. The pre-operational cleaning method of present disclosure will be described in the following in connection with the combined cycle power plant 1 shown in Fig. 1, but it may be applied to any other power plant that includes steam generating facilities.

As provided herein, the method of pre-operational cleaning starts with performing a pre-operational initial flushing and chemical cleaning operation on the water and steam system of the constructed combined cycle power plant 1. Substantially all parts and pipelines carrying steam or steam condensate, including HRSG drums, economizers, superheaters and reheater, the steam lines, auxiliary steam lines, bypass lines, feedwater lines, and the condensate system, may be flushed using treated de-ionized water to remove contaminants. In addition, further chemical cleaning steps, including one or more of hot degreasing, acid cleaning, passivation and rinsing, may be performed. Low points and HRSG collectors may be inspected and hydrolazed, where required, to remove particulate contaminants. Finally, a dry air conservation step may follow.

When the chemical cleaning operation is completed, as the next step of the pre-operational cleaning method, a validation steam blow procedure is performed. According to the present method, a validation steam blow procedure to condenser is performed while the gas turbine engine is commissioned.

Thus, the gas turbine engine 2 is first fired, and commissioning of the gas turbine engine 2 is started. Normal gas turbine engine commissioning activities will drive the normal schedule with the gas turbine engine 2 in bypass operation, including Full Speed No Load (FSNL) operation, testing of safety valves of the HRSG 3, and loading the gas turbine engine 2 to base load, i.e., the maximum rated load, for combustion tuning.

The validation steam blow procedure is performed in parallel to the commissioning of the gas turbine engine 2. The validation steam blow procedure includes a steam blow operation, where steam is generated in the HRSG 3 using the high-energy exhaust gas from the gas turbine engine 2 and the steam is blown at high velocities, temperatures and cleaning force ratio conditions through the steam-carrying portion of the closed flow circuit formed by the HRSG 3, the piping connecting the HRSG 3 to the steam turbine system 4, the bypass lines 52, 53, 54, the condenser 6 and the condensate system 7 for cleaning the steam-carrying parts. In doing so, the validation steam is routed to bypass the steam turbine system 4 via the permanent bypass system that includes the permanent operational HP, HRH, and LP bypass lines 52, 53, 54 and is discharged to the condenser 6. The condensate produced in the condenser 6 is cleaned, where necessary, and returned back to the HRSG 3, thus forming a closed-loop circuit. The steam-blown steam lines of the closed-loop circuit of the validation steam blow are indicated by thicker solid lines in Fig. 1. The validation steam blow procedure further includes monitoring and validation of cleanliness of the steam-blown steam lines in parallel to the steam blowing.

The validation steam blow to condenser in combination with the simultaneous, parallel performance of the normal gas turbine engine commissioning presents various advantages. The power plant 1 will start up as per normal configuration without any temporary control and without requiring any temporary piping, which would otherwise be required for the validation steam blow procedure only and which would not be used during the normal operation. Rather, the permanent operational HP, HRH, and LP bypass lines 52, 53, 54 are used herein for the validation steam blow to the condenser 6. Since the steam and water are circulated in a closed circuit, demineralized water consumption may be limited. No noise and no visual pollution occur, and the procedure is emission compliant during the steam blow procedure. In addition, the normal gas turbine engine commissioning is performed in parallel, such that fired hours and fuel consumption to execute the procedure may also be reduced. There are no safety concerns as the power plant 1 is in normal operation. Efficient cleaning may be achieved with thermal cycling and high temperatures, and the required steam quality for normal operation can be achieved in a short period of time and in a cost-effective manner.

To reach the required disturbance factors and cleaning efficiencies during the steam blow procedure, while avoiding damage to the equipment to be steam blown, the validation steam blow process is preferably already integrated and taken into consideration in the initial design or concept phase of a project for constructing a new power plant. The steam blow operation will be performed while the gas turbine engine is operated at base load, and all operational piping of the HRSG 3, the steam lines 39-51, the bypass lines 52-54 and the bypass valves 55-57, which are to be effectively steam blown, are consequently each designed for such operating conditions and for a cleaning force ratio CFR of at least 1.1 or even at least 1.2. The cleaning force ratio *CFR* is calculated as

$$CFR = \left(\frac{Q_c}{Q_{max}}\right)^2 \times \frac{(PV)_c}{(PV)_{max}} \times \frac{P_{max}}{P_c} \quad ,$$

wherein $Q_c$ is the calculated flow during cleaning, $Q_{max}$ is the maximum load flow, $(PV)_c$ is the pressure-specific volume product during cleaning, $(PV)_{max}$ is the pressure specific volume product at maximum load flow, $P_{max}$ is the pressure at maximum load flow, and $P_c$ is the pressure during cleaning. Thus, the steam-carrying parts to be steam blown must meet more stringent requirements than the corresponding parts of conventional power plants under the maximum rated operating conditions.

In order to determine what the capability of the equipment of the steam and water system shall be for the steam blow procedure, it may be checked at which pressure each piping section shall be operated to exceed the expected CFR with the steam flow available, when operating the gas turbine system at base load under the expected realistic ambient conditions for the steam blow. Usually, the normal ambient conditions may be considered. In preferred embodiments of the power plant shown in Fig. 1, at least the steam lines 39-51, the bypass lines 52-54 and the bodies of the bypass valves 55-57 are sized and arranged for a cleaning force ratio CFR of at least 1.1. More preferably, at least some of these steam lines may be sized and arranged for a CFR of at least 1.2.

Some preparation work can be done to allow for the efficient and safe validation steam blow procedure. In particular, modulating sacrificial trims (not shown) may be installed in at least some of the HP, HRH, and LP bypass valves 55, 56, 57 in the operational HP, HRH, and LP bypass lines 52, 53, 54 to prevent operational trims to be damaged and to increase the flow coefficient (CV) capability of the bypass valves, where needed. Permanent trims will be sized based on the maximum loading cases, except the steam blow case, and to have a great durability. In contrast, the sacrificial trims are specifically designed for an increased or maximum flow coefficient CV. Durability plays a subordinate role.

The sacrificial trims may be designed to support a cleaning force ratio CFR of at least 1.2 for a single HRSG plant configuration and at least 1.03 for multiple-HRSG plant configurations. The required flow coefficient CV of the sacrificial trim may be calculated based on estimated conditions, and a margin of 10-20%, for example, can be added thereto in order to ensure that the required CFR can be met in true operating conditions at site. For the HP bypass valve 55, which is exposed to the largest load during the steam blow procedure, the sacrificial trim can be preferably designed to provide the maximum CV that the valve body can accommodate.

In preferred implementations, the modulating sacrificial trim installed may consist of a piston with an associated gasket and a cage having an increased number of holes or larger holes therein to allow for higher volumetric flows and flow velocities of the steam passing therethrough. The sacrificial trims are removed again and replaced by final operational trims after the steam blow procedure is completed.

The steam blow achieved in the bypass operation may require that bypass attemperation flows, if any, shall be taken into account for planning the validation steam blow procedure. For example, the temperature set point of the HP bypass line 52 can be set based on the expected pressure in the CRH line 51, as per normal bypass attemperation control, but using the expected CRH line pressure at the time of the validation steam blow.

In order to allow long sections of the steam-carrying piping to be cleaned, the take-offs of the permanent operational HP, HRH, and LP bypass lines 52, 53, 54 may be positioned as close to the steam turbine system 4 as can be accomplished. This means, they are positioned reasonably close to the steam turbine system 4 to be nearby the area of the steam turbine system 4, but in a sufficient distance to avoid the bypass lines 52, 53, 54 being affected by the steam turbine building, the type of the condenser 6 and their operation. The take-offs of the HP, HRH, and LP bypass lines 52, 53, and 54 will be positioned in close vicinity and just upstream of the steam control and isolation valve assemblies 63, 64, 65. The HP, HRH, and LP bypass lines 52, 53, and 54 shall not be installed in the area of the HRSG 3, in particular not on the HRSG pipe rack. The HRH and LP bypass lines 53, 54 run directly to the condenser 6 and may be generally installed close to the condenser 6 in the steam turbine area. The HP bypass line 52 shall not be installed directly in the steam turbine area, but as close as possible and reasonable thereto. The non-return valve 66 on the CRH line 51 and a downstream connection of the HP bypass line 52 to the CRH line 51 are also positioned as close to the HP steam turbine 17 as can be accomplished.

To allow for target inspection and monitoring of cleanliness at the steam temperatures and pressure operating conditions during the validation blow procedure, target inserts are installed in relevant portions of the steam-carrying piping. In particular, a first target insert 67 is installed in the HRH line 49 slightly upstream of the HRH bypass line 53 and the IP control and isolation valve assembly 64, and a second target insert 68 is installed in the LP steam line 41 slightly upstream of the LP bypass line 54 and the LP control and isolation valve assembly 65.

The target inserts 67, 68 are preferably using mirror or highly polished metal plates constructed of steel capable of withstanding the maximum steam conditions and forces of the respective steam flows in the HRH and LP steam lines 49, 41. The target plates of the target inserts 67, 68 are impacted by the debris entrained by the steam flow during the validation steam blow procedure and will visually show the presence of particle contamination entrained in the steam flow by means of particle impacts on the target (metal or mirror) plate.

Moreover, in the present method of the validation steam blow, steam flow meters (not shown) may be installed in relevant portions of the operational piping of the HRSG 3, the steam lines 39-51 and the bypass lines 52-54 to measure the flows of the steam blow in these portions. The steam flow meters (not shown in Fig. 1) can be of a venturi or nozzle type, for example. The cleaning force ratios CFR in the relevant portions can then be calculated online based on the steam flow measurements received from the steam flow meters during the validation blow procedure. In particular, the CFR calculations can be included as part of the normal plant control software of the control system 9 to verify the cleaning force ratio during the validation steam blow procedure. The calculated CFR values can be presented to the operator of the power plant 1 via a suitable graphical interface during the validation steam blow procedure to facilitate monitoring and verifying that the required steam blow conditions are met.

The method of pre-operational cleaning may further include providing inspection/cleaning ports (not shown in Fig. 1) in non-steam blown sections of the steam lines and inspecting and cleaning the non-steam blown sections after the validation blow procedure is completed. The non-steam blown sections are indicated by thicker dashed lines in Fig. 1 (and other Figures) and include, in particular, a non-blown HP steam line section 69 between the take-off connection of the HP bypass line 52 to the CRH line 51 and the HP control and isolation valve assembly 63; a non-blown HRH line section 70 between the take-off connection of the HRH bypass line 53 to the condenser 6 and the IP control and isolation valve assembly 64; a non-blown CRH line section 71 between the downstream connection of the HP bypass line 52 to the CRH line 51 and the non-return valve 66 at the outlet of the HP steam turbine 17; and a non-blown LP steam line section 72 between the take-off connection of the LP bypass line 54 to the condenser 6 and the LP control and isolation valve assembly 65.

The inspection/cleaning ports in the non-steam blown sections 69-72 are provided at suitable locations to facilitate easy inspection and cleaning. Inspection can be performed using borescopes or robots equipped with cameras, and remaining contaminants in the critical portions can be removed by rinsing or other suitable means. Other inspection/cleaning ports can be provided to facilitate access to other piping portions to allow for inspection and cleaning of dead legs, drain ports, and the like.

In some further embodiments of the combined cycle power plant 1, in order to make the method of pre-operational cleaning more efficient, at least some of the take-off connections of the HP, HRH, and LP bypass lines 52, 53, 54 can be realized with a T connection (not shown) which is straight to the respective bypass line 52, 53, or 54 and not straight to the respective steam turbine 17, 18, or 19. Such an arrangement facilitates reducing accumulation of debris in dead legs upstream of the respective steam turbine 17, 18, or 19 and may save time for inspecting on critical paths and cleaning dirt therein. Inspections and cleaning ports might then possibly not be required and may be dispensed with. This option is preferably applicable for configurations without steam isolation valves or sections upstream of steam isolation valves and can be of particular interest in the case of HP steam, where the option of adding an inspection flange might be more challenging. Advantageously, it has been found that a straight line to a bypass line may also limit erosion of steam turbine valves during long-term plant operation.

Referring now to Fig. 2, a schematic of a combined cycle power plant 1' including a multi-unit configuration is shown. In the exemplary embodiment shown in Fig. 2, the power plant 1' comprises a single steam turbine system 4, a first unit 73 including a first HRSG 3a and a first gas turbine engine 2a, and a second unit 74 including a second HRSG 3b and a second gas turbine engine 2b. The relevant components of the first unit 73 are shown using corresponding reference signs of figure 1 denoted with an additional "a", while the corresponding components of the second unit 74 are denoted with an additional "b".

As can be seen in Fig. 2, the method of pre-operational cleaning of water and steam systems in the combined cycle power plant 1' can be advantageously performed for each of the first and second unit 73, 74 independently of the other unit. Here again, the steam-blown steam lines are indicated by thicker solid lines in Fig. 2, while the non-steam blown sections are indicated by thicker dashed lines. The non-steam blown sections extend from the bypass take-offs up to the steam turbine valves. All non-steam blown sections need to be pre-cleaned, inspected and validated after chemical cleaning. The portions immediately upstream of the steam isolation valves may accumulate debris during the validation steam blow and may need to be post-cleaned (assuming that the steam isolation valves are closed during validation steam blow to avoid carry over of accumulation to portions downstream of the steam isolation valves).

The validation blow procedures for the first and second unit 73, 74 may be performed simultaneously, but are more preferably performed sequentially (i.e., one after the other). Again, no temporary piping or temporary control is required for the validation steam blow operation of each of the first and second units 73, 74. Rather, only permanent operational steam lines, including the bypass lines 52a, 52b, 53a, 53b, 54a, 54b, can be used for the steam blow procedure to the condenser 6 that is performed in parallel with the normal commissioning of the gas turbine engines 2a, 2b. The condenser 6 in Fig. 2 is shown to be an air-cooled condenser, but it is understood that it might also be a water-cooled condenser or any other type of a condenser, e.g., a direct condenser (jet condenser).

In some preferred embodiments, the validation blow procedure may be performed on one of the first and second units 73, 74, while simultaneously dead legs and other critical paths are inspected and post-cleaned following the validation blow procedure in the other unit. As generally common sections are not included, the steam blow, inspection and post-cleaning procedures may be performed independently for each of the first and second units 73, 74.

In the multi-unit configuration of the combined cycle power plant 1' shown in Fig. 2, the first and the second units 73, 74 are fluidly coupled to each other through communication lines 76 which respectively connect the LP steam lines 41a, 41b, the HRH lines 49a, 49b and the HP steam lines 47a, 47b downstream of the take-off connections of the respective HP bypass lines 52a, 52b, HRH bypass lines 53a, 53b and LP bypass lines 54a, 54b together. The communication lines 76 are not included in the validation steam blow procedure. Isolation valves 77a, 77b are integrated slightly downstream of the respective take-off connections of the bypass lines 52a, 52b, 53a, 53b, 54a, 54b to block the communication lines 76 during the validation steam blow procedure such that the steam blow can be routed via the bypass lines 52a, 52b, 53a, 53b, 54a, 54b to the condenser 6 and prevent the potential contamination of those coupling/common lines during the validation steam blow. After chemical cleaning and prior to the validation steam blow, the piping section downstream of the isolation valves 77a, 77b including communication lines 76 up to the steam turbines 17, 18, 19 are high-pressure water jetted and completely (100 %) inspected and validated.

Apart from the provision of the two units 73, 74 and the communication lines 76, the configuration of the power plant 1', in particular the configuration of the steam turbine system 4 and each unit 73, 74, corresponds to the configuration of the power plant 1, in particular the steam turbine system 4 and the combination of the gas turbine engine 2 and the HRSG 3 in the embodiment of Fig. 1. The operation of these units and, in particular, the method of pre-operational cleaning of water and steam systems in the combined cycle power plants 1 and 1' also substantially correspond to each other such that the above description of the configurations and the pre-operational cleaning method as well as the technical effects and advantages associated therewith equally apply to the embodiment of Fig. 2.

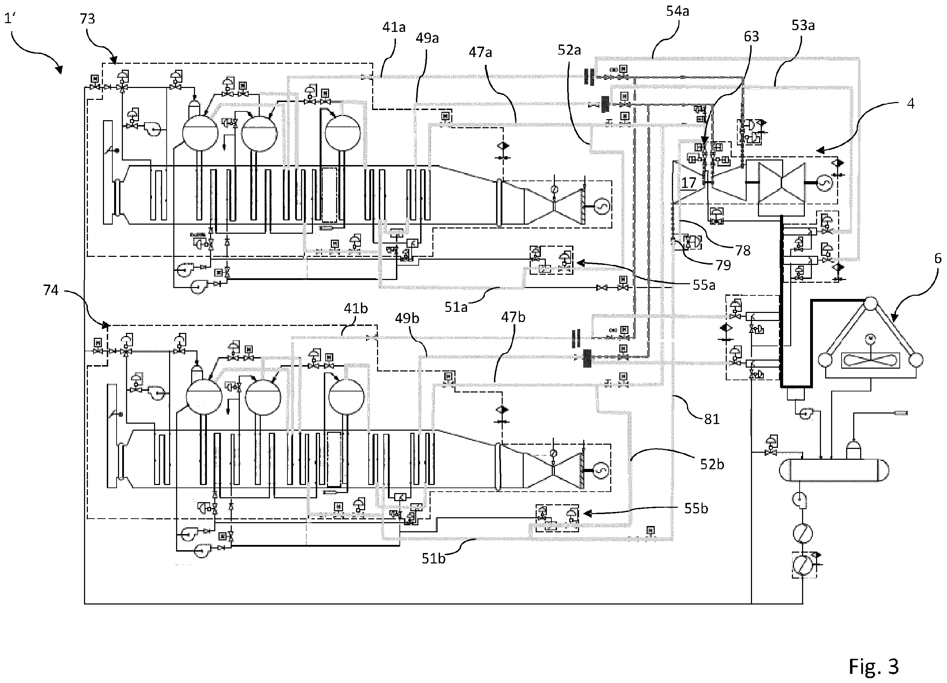

Referring now to Fig. 3, a schematic of a modification of the embodiment of the power plant 1' of Fig. 2 is shown. The entire description of the embodiment of Fig. 2 in combination with the description of the embodiment of Fig 1 shall also apply to the embodiment of Fig. 3 except for the differences mentioned below. The same components in the embodiments of Figs. 2 and 3 are indicated by the same reference numbers.

The embodiment of Fig. 3 differs from the embodiment of Fig. 2 essentially in that a temporary jumper 78 is installed from the HP control and isolation valve assembly 63 of the HP steam turbine 17 to a non-return valve 79 on a common CRH line 81 upstream of the take-off connections of the CRH lines 51a, 51b of the first and second units 73, 74. The temporary jumper 78 allows for routing the steam flow in the validation steam flow procedure from the HP steam line 47a, 47b through the temporary jumper 78 directly to the CRH lines 51a, 51b without using or with reduced use of the HP bypass lines 52a, 52b. This embodiment is advantageous in applications, where the HP bypass valves 55a, 55b are not capable of reaching the sufficient CFR on the HP lines or to limit the non-blown sections of the HP steam lines 47a, 47b and CRH lines 51a, 51b. The HRH bypass valves 56a, 56b are sized to allow for achieving the correct CFR on the HP and HRH steam lines.

In order not to overheat the CRH lines 81, 51a, 51b and to control the temperature of the steam flowing through the CRH lines, an HP steam terminal attemperator (not shown) may be designed and arranged to allow attemperation of the HP steam prior to entering the common CRH line 81 for the maximum steam blow conditions. When no HP terminal attemperator is available, a specific port can be planned on the HP steam piping to allow a temporary attemperator to be connected during the validation blow. All the other aspects described above remain applicable.

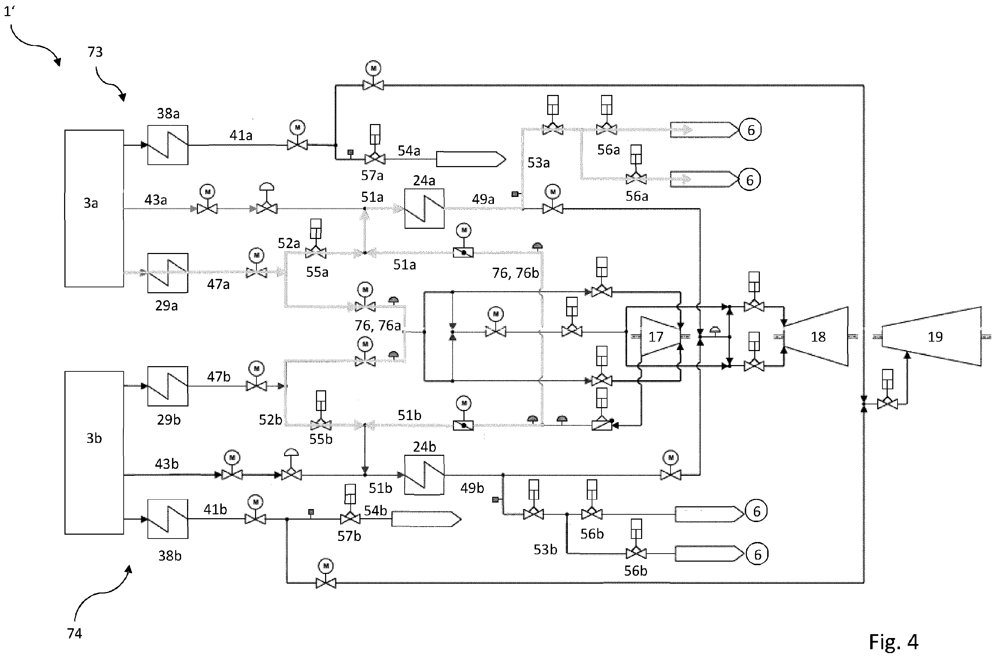

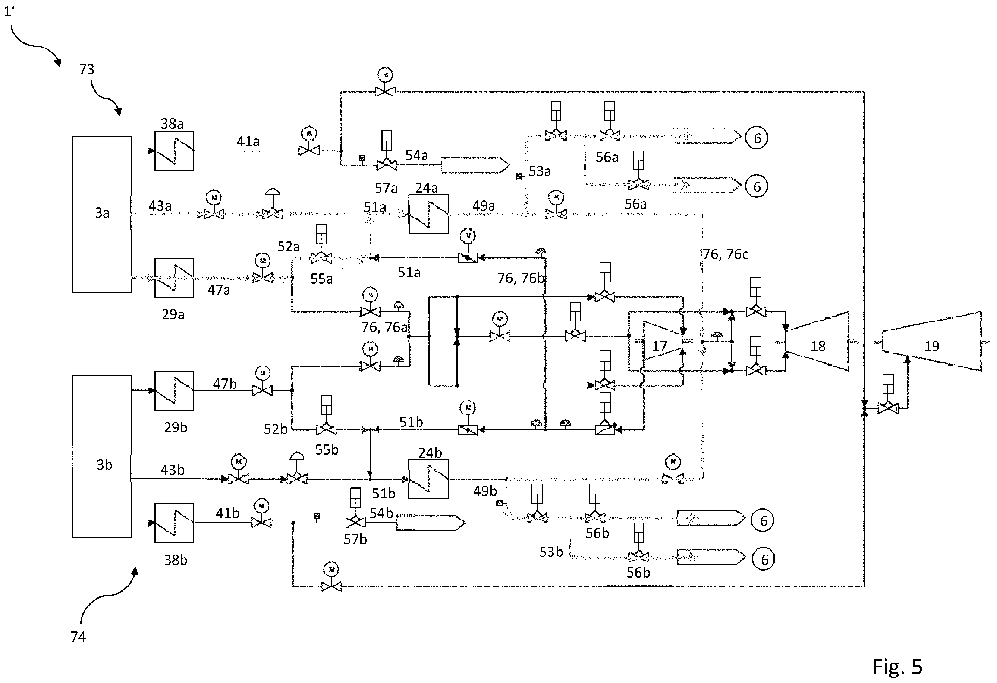

Figs. 4 and 5 show the embodiment of the combined cycle power plant 1' of Fig. 2 in a modified schematic process flow representation. Generally, the configuration of the power plant shown in Figs. 4 and 5 corresponds to that of the power plant 1' shown in Fig. 2. Equal reference signs are assigned to the same components in Figs. 4, 5 and those in Fig. 2 and generally the above description of the embodiment of Fig. 2 equally applies to the embodiment shown in Figs. 4 and 5. In this plant configuration, only one HRSG 3a or 3b is heated to generate steam, while the other HRSG shall be in standby.

In the embodiment of Figs. 4 and 5, only a part of the validation steam blow procedure is slightly modified in order not to oversize the bypass valves, in particular the HP bypass valves 55a, 55b in the first and second unit 73, 74. To this end, while the validation steam blow procedure is performed in one of the first and second units 73 or 74, at least one bypass line and bypass valve is used in the other unit 74 or 73 to route at least a portion of the validation steam flow therethrough such that the volumetric flow of the steam may be reduced in the bypass valves. The validation steam flow is indicated again by thicker solid lines in Figs. 4 and 5.

In the scenario shown in Fig. 4, validation steam is provided in the first unit 73 from the HRSG 3a through the HP superheater 29a to the take-off connection of the HP bypass line 52a, where the validation steam flow is divided into two portions. A first portion of the validation steam flow is directed through the HP bypass line 52a and the HP bypass valve 55a and through the CRH line 51a to the reheater 24a. A second portion of the validation steam blow is diverted through a communication line 76a of the communication lines 76, that connects the HP steam lines 47a, 47b of the two units 73, 74 together, to the HP bypass line 52b of the second unit 74. The second portion of the validation steam flow is then routed through the HP bypass line 52b and the HP bypass valve 55b, the CRH line 51b and a further common communication line 76b of the communication lines 76 back to the CRH-line 51a of the first unit 73 to mix with the first portion of validation steam flow and to be provided to the reheater 24a of the first unit 73. To allow for such a validation steam flow, all control and isolation valves in the HP-steam line 47a, the common communication line 76a, the CRH lines 51a, 51b, and the common communication line 76b need to be open. From the reheater 24a, the combined validation steam flow is then discharged via the HRH line 49a and the HRH bypass line 53a of the first unit 73 directly to the condenser 6.

Similarly, the HP steam flow applied to the second unit 74 during the validation steam flow procedure can be controlled such that the HP steam flow is divided and routed through both the HP bypass lines 52a, 52b of both the units 73 and 74, the CRH lines 51a, 51b and the common communication lines 76a, 76b and then recombined and provided through the reheater 24b and the HRH bypass line 53b of the second unit 74 directly to the condenser 6.

In the example shown in Fig. 4, the validation steam blow procedure is not performed independently between the first and second units 73 and 74, but the requirements for the HP bypass lines 52a, 52b and the HP bypass valves 55a, 55b can be reduced.

In the modified process flow shown in Fig. 5, HP steam from the HRSG 3a of the first unit 73 is routed through the HP steam line 47a and through the HP bypass line 52a and the HP bypass valve 55a to the reheater 24a. The first portion of the validation steam flow is then provided from the reheater 24a through the HRH line 49a, the HRH bypass line 53a and the HRH bypass valve 56a of the first unit 73 directly to the condenser 6. A second portion of the validation steam flow is diverted in the HRH line 49a downstream of the reheater 24a and routed through a common communication line 76c of the communication lines 76 to the HRH line 49b of the second unit 74. The second portion of the validation steam flow can then be discharged through the HRH bypass line 53b and the HRH bypass valve 56b directly to the condenser 6. Thus, the validation steam flow can be divided and passed through the HRH bypass lines and bypass valves of both the first and second units 73, 74, thereby reducing the sizing requirement imposed on the HRH bypass lines and HRH bypass valves to reach the required CFR.

Technical effects and advantages of the method of pre-operational cleaning of water and steam systems in combined cycle power plants and the corresponding combined cycle power plant according to the present invention include at least the following: The power plant can be started as per normal configuration, with no temporary control, such that an easy start up sequence is provided. Efficient cleaning may be achieved with high thermal cycles and high temperatures as the power plant is run at full load (base load) of the gas turbine engine during the initial power plant commissioning. Fast steam quality can be achieved with condenser cleaning and closed-loop circuit operation at higher load. Generally, no temporary piping and no temporary control is required for performing the validation steam blow procedure. Flame hours and natural gas or other fuel gas consumption can be limited. Demineralized water consumption may also be limited. Normal gas turbine and generator commissioning can be performed in parallel to the validation blows with limited shutdown for reconfiguration. Minimal time is required for remaining inspections and cleaning on critical paths. There are no safety concerns, as the plant is in normal operation, and there is no noise and no visual pollution. The gas turbine exhaust emission can be reduced, because steam blow is performed above minimum environment load. Selective Catalytic Reduction (SCR) catalysts can be installed directly after the validation steam blow during the steam blow outage for inspection and final cleaning, as the gas turbine engine has already run at base load, which offers the maximum poison protection coming from greases and dust from the gas turbine engine and HRSG air duct flow for the catalysts and removes the requirement for further shutdown during the hot commissioning. In a multi-unit configuration of a combined cycle power plant, the validation steam blow procedures can be performed independently for each unit. Alternatively, the validation steam blow procedures in both units can be performed in a combined manner and/or using a short length temporary jumper to allow for reducing requirements on the bypass valves used.

**Claims**

1. A method of pre-operational cleaning of water and steam systems in a combined cycle power plant (1, 1') including a gas turbine engine (2), a steam turbine system (4), a condenser (6), and a heat recovery steam generator HRSG (3), the method comprising:

    performing a pre-operational initial flushing and chemical cleaning operation on the water and steam system of the finally constructed combined cycle power plant (1, 1');
    firing the gas turbine engine (2) and commissioning the gas turbine engine (2);
    while the gas turbine engine (2) is being commissioned, performing a validation steam blow procedure including a steam blow operation, wherein steam is generated in the HRSG (3) and blown at high velocities, temperatures and cleaning force ratio conditions through a portion of a closed flow circuit for cleaning steam-carrying parts of the HRSG (3) and steam lines (39-51) connecting the HRSG (3) to the steam turbine system (4), wherein the steam is routed to bypass the steam turbine system (4) via operational bypass lines (52-54), without using any temporary piping, and is discharged to the condenser (6); and
    monitoring and validating cleanliness of selected steam-blown steam lines (39-54);
    wherein the steam blow operation is performed, while the gas turbine engine (2) is operated at base load; and
    wherein the steam-carrying parts of the HRSG (3), the steam lines (39-51), and the operational bypass lines (52-54) including bypass valves (55-57) to be steam-blown are each designed for a cleaning force ratio *CFR* of at least 1.1, wherein the cleaning force ratio *CFR* is calculated as:

$$CFR = \left(\frac{Q_c}{Q_{max}}\right)^2 \times \frac{(PV)_c}{(PV)_{max}} \times \frac{P_{max}}{P_c} \ ,$$

    wherein $Q_c$ is a calculated flow during cleaning, $Q_{max}$ is a maximum load flow, $(PV)_c$ is a pressure-specific volume product during cleaning, $(PV)_{max}$ is a pressure specific volume product at maximum load flow, $P_{max}$ is a pressure at maximum load flow, and $P_c$ is a pressure during cleaning.

2. The method of claim 1, wherein the HRSG (3) has a plurality of pressure stages including a high-pressure HP stage (21), an intermediate-pressure IP stage (22), a low-pressure LP stage (23), and a reheater (24);

    wherein the steam turbine system (4) includes an HP steam turbine (17), an IP steam turbine (18), and an LP steam turbine (19);
    wherein the steam lines (39-51) include an HP steam line (47) for supplying HP steam from the HP stage (21) of the HRSG (3) towards the HP steam turbine (17), an IP steam line (43) connecting the IP stage (22) of the HRSG (3) to the reheater (24), a hot re-heat HRH line (49) for supplying IP steam from the reheater (24) towards the IP steam turbine (18), a cold re-heat CRH line (51) for receiving used HP steam from the HP steam turbine (17) and supplying the used HP steam to the reheater (24), an operational HP bypass line (52) arranged between the HP steam line (47) and the CRH line (51), an operational HRH bypass line (53) arranged between the HRH line (49) and the condenser (6), and an operational LP bypass line (54) arranged between the LP steam line (41) and the condenser (6); and
    wherein designing of the steam-carrying parts of the HRSG (3), steam lines (39-51), and operational bypass lines (52-54) including bypass valves (55-57) includes sizing and arranging at least the HP steam, IP steam, HRH, CRH, and LP steam lines (47, 43, 49, 51, 41) and the HP, HRH, and LP bypass lines (52, 53, 54) for a cleaning force ratio CFR of at least 1.1.

3. The method of claim 2, further comprising providing at least some of the HP, HRH, and LP bypass valves (55, 56, 57) in the operational HP, HRH, and LP bypass lines (52, 53, 54) with modulating sacrificial trims designed to increase the flow coefficient CV capability of the bypass valves (55, 56, 57) so as to support a cleaning force ratio CFR of at least 1.2 for single HRSG plant configurations and at least 1.03 for multiple HRSG plant configurations.

4. The method of claim 2 or 3, further comprising positioning take-off connections of the operational HP, HRH, and LP bypass lines (52, 53, 54) as close to the steam turbine system (4) as can be accomplished, in close vicinity and just upstream of control and isolation valve assemblies (63, 64, 65) of the HP, IP, and LP steam turbines (17, 18, 19); and positioning a non-return valve (66) on the CRH line (51) and a downstream connection of the HP bypass line (52) to the CRH line (51) as close to the HP steam turbine (4) as can be accomplished.

5. The method of any one of claims 2-4, further comprising installing target inserts (67, 68), preferably in the form of highly polished steel plates, in the HRH line (49) and the LP steam line (41), the target inserts (67, 68) configured and arranged to allow for online target inspection and monitoring of cleanliness of the steam blown steam lines (39-57) at the steam temperatures and pressure operating conditions during the validation blow procedure.

6. The method of any one of the preceding claims, further comprising installing steam flow meters in relevant portions of the steam-carrying parts of the HRSG (3), steam lines (39-51) and operational bypass lines (52-54); and calculating the CFR in the relevant portions based on steam flow measurements of the steam flow meters during the validation blow procedure.

7. The method of any one of the preceding claims, further comprising providing inspection/cleaning ports in non-steam blown sections (69-72) of the steam lines (47, 41, 49, 51); and inspecting and cleaning the non-steam blown sections (69-72) after the validation blow procedure is completed.

8. The method of any one of the claims 2 to 7, further comprising providing at least some of the take-off connections of the HP, HRH, and LP bypass lines (52, 53, 54) with a T connection which is straight to the respective bypass line and not straight to the respective steam turbine section (17, 18, 19) to reduce accumulation of debris in dead legs upstream of the respective steam turbine section (17, 18, 19).

9. The method of any one of the preceding claims, wherein the combined cycle power plant (1') has a multi-unit configuration comprising a single steam turbine system (4), a first unit (73) including a first HRSG (3a) and a first gas turbine engine (2a), and a second unit (74) including a second HRSG (3b) and a second gas turbine engine (2b), the method comprising performing the validation blow procedures independently between the first and second units (73, 74).

10. The method of claim 9, comprising performing the validation blow procedures for the first and the second units (73, 74) one after the other and preferably performing the validation blow procedure on one of the first and second units (73, 74), while simultaneously inspecting and cleaning dead legs following the validation blow procedure in the other unit (74, 73).

11. The method of any one of claims 1-8, wherein the combined cycle power plant (1') includes a multi-unit configuration comprising a single steam turbine system (4), a first unit (73) including a first HRSG (3a) and a first gas turbine engine (2a), and a second unit (74) including a second HRSG (3b) and a second gas turbine engine (2b), the method comprising, while performing the validation blow procedure in one of the first and second units (73, 74), using at least one bypass line (52-54) and bypass valve (55-57) in the other unit (74, 73) to route the validation steam therethrough.

12. The method of any one of claims 2-8, wherein the combined cycle power plant (1') includes a multi-unit configuration comprising a single steam turbine system (4), a first unit (73) including a first HRSG (3a) and a first gas turbine engine (2a), and a second unit (74) including a second HRSG (3b) and a second gas turbine engine (2b), the method comprising installing a temporary jumper (78) from HP steam turbine valves (63) of the HP steam turbine (17) to a non-return valve (79) on a common cold re-heat CRH line (81) and sizing the HRH bypass valves (56a, 56b) to allow for a CFR of at least 1.1 on the HP and HRH steam systems.

13. A combined cycle power plant (1, 1'), comprising:

   a gas turbine engine (2) for generating power;
   a heat recovery steam generator HRSG (3) fluidly connected to the gas turbine engine (2) for receiving high energy exhaust gas produced from the generation of power in the gas turbine engine (2) and configured for producing steam from the high energy exhaust gas;

a steam turbine system (4) fluidly connected to the HRSG (3) via steam lines (39-51) for receiving steam produced in the HRSG (3) and configured for producing additional power from the steam;

a condenser (6) coupled to the steam turbine system (4) for condensing used steam output from the steam turbine system (4) and a condensate system (7) for returning condensate from the condenser (6) to the HRSG (3);

operational bypass lines (52-54) fluidly connected between the steam lines (39-51) and the condenser (6) and arranged to bypass the steam turbine system (4); and

a control system (9) for controlling normal operation of the gas turbine engine (2), the HRSG (3), the steam turbine system (4), and the condenser (6) for generating power under varying operating conditions, the control system (9) being further configured to perform a pre-operational cleaning of water and steam systems in the combined cycle power plant (1, 1') by:

firing the gas turbine engine (2) and commissioning the gas turbine engine (2);

while the gas turbine engine (2) is being commissioned, performing a validation steam blow procedure including a steam blow operation, wherein steam is generated in the HRSG (3) and blown at high velocities, temperatures and cleaning force ratio conditions through a portion of a closed flow circuit for cleaning the steam-carrying parts of the HRSG (3) and steam lines (39-51) connecting the HRSG (3) to the steam turbine system (4), wherein the steam is routed to bypass the steam turbine system (4) via the operational bypass lines (52-54), without using any temporary piping, and is discharged to the condenser (6); and

monitoring and validating cleanliness of selected steam blown steam lines (39-54);

wherein the steam blow operation is performed, while the gas turbine engine (2) is operated at base load; and

wherein the steam-carrying parts of the HRSG (3), the steam lines (39-51), and the operational bypass lines (52-54) including bypass valves (55-57) to be steam-blown are each designed for a cleaning force ratio *CFR* of at least 1.1, wherein the cleaning force ratio *CFR* is calculated as:

$$CFR = \left(\frac{Q_c}{Q_{max}}\right)^2 \times \frac{(PV)_c}{(PV)_{max}} \times \frac{P_{max}}{P_c} \quad,$$

wherein $Q_c$ is a calculated flow during cleaning, $Q_{max}$ is a maximum load flow, $(PV)_c$ is a pressure-specific volume product during cleaning, $(PV)_{max}$ is a pressure specific volume product at maximum load flow, $P_{max}$ is a pressure at maximum load flow, and $P_c$ is a pressure during cleaning.

**14.** The combined cycle power plant (1, 1') of claim 13, wherein the combined cycle power plant (1, 1') is configured as claimed in any one of the preceding claims and the control system (9) is configured to perform the validation steam blow procedure according to any one of the preceding claims.

## Patentansprüche

**1.** Verfahren für eine vorbetriebliche Reinigung von Wasser- und Dampfsystemen in einem Kombikraftwerk (1, 1'), das ein Gasturbinentriebwerk (2), ein Dampfturbinensystem (4), einen Kondensator (6) und einen Abhitzerdampferzeuger HRSG (3) einschließt, das Verfahren umfassend:

Durchführen eines vorbetrieblichen anfänglichen Spül- und chemischen Reinigungsbetriebs an dem Wasser- und Dampfsystem des endgültig errichteten Kombikraftwerks (1, 1');

Zünden des Gasturbinentriebwerks (2) und Indienststellung des Gasturbinentriebwerks (2);

während das Gasturbinentriebwerk (2) in Dienst gestellt wird, Durchführen eines Validierungsdampfblasvorgangs, der einen Dampfblasbetrieb einschließt, wobei Dampf in dem HRSG (3) erzeugt und zum Reinigen von dampfführenden Teilen des HRSG (3) und Dampfleitungen (39-51), die den HRSG (3) mit dem Dampfturbinensystem (4) verbinden, bei hohen Geschwindigkeiten, Temperaturen und Reinigungskraftverhältnisbedingungen durch einen Abschnitt eines geschlossenen Durchflusskreislaufs geblasen wird, wobei der Dampf geleitet wird, um das Dampfturbinensystem (4) über Betriebsumgehungsleitungen (52-54) zu umgehen, ohne jegliche temporäre Rohrleitungen zu verwenden, und an den Kondensator (6) abgegeben wird; und

Überwachen und Validieren einer Reinheit ausgewählter dampfgeblasener Dampfleitungen (39-54);

wobei der Dampfblasvorgang durchgeführt wird, während das Gasturbinentriebwerk (2) bei Grundlast betrieben wird; und

wobei die dampfführenden Teile des HRSG (3), die Dampfleitungen (39-51) und die Betriebsumgehungsleitungen (52-54), die Umgehungsventile (55-57) einschließen, die dampfgeblasen werden sollen, jeweils für ein Reinigungskraftverhältnis *CFR* von mindestens 1,1 ausgelegt sind, wobei das Reinigungskraftverhältnis *CFR* berechnet wird als:

$$CFR = \left(\frac{Q_c}{Q_{max}}\right)^2 \times \frac{(PV)_c}{(PV)_{max}} \times \frac{P_{max}}{P_c} \quad ,$$

wobei $Q_c$ ein berechneter Durchfluss während der Reinigung ist, $Q_{max}$ ein maximaler Lastdurchfluss ist, $(PV)_c$ ein druckspezifisches Volumenprodukt während der Reinigung ist, $(PV)_{max}$ ein druckspezifisches Volumenprodukt bei maximalem Lastdurchfluss ist, $P_{max}$ ein Druck bei maximalem Lastdurchfluss ist, und $P_c$ ein Druck während der Reinigung ist.

2. Verfahren nach Anspruch 1, wobei der HRSG (3) eine Vielzahl von Druckstufen aufweist, die eine Hochdruckstufe (HP-Stufe) (21), eine Mitteldruckstufe (IP-Stufe) (22), eine Niederdruckstufe (LP-Stufe) (23) und einen Zwischenüberhitzer (24) einschließen;

wobei das Dampfturbinensystem (4) eine HP-Dampfturbine (17), eine IP-Dampfturbine (18) und eine IP-Dampfturbine (19) einschließt;
wobei die Dampfleitungen (39-51) eine HP-Dampfleitung (47) zum Zuführen von HP-Dampf von der HP-Stufe (21) des HRSG (3) zu der HP-Dampfturbine (17), eine IP-Dampfleitung (43), die die IP-Stufe (22) des HRSG (3) mit dem Zwischenüberhitzer (24) verbindet, eine Heißzwischenüberhitzungsleitung (HRH-Leitung) (49) zum Zuführen von IP-Dampf von dem Zwischenüberhitzer (24) zu der IP-Dampfturbine (18), eine Kaltzwischenüberhitzungsleitung (CRH-Leitung) (51) zum Empfangen von verbrauchtem HP-Dampf von der HP-Dampfturbine (17) und zum Zuführen des verbrauchten HP-Dampfes zu dem Zwischenüberhitzer (24), eine Betriebs-HP-Umgehungsleitung (52), die zwischen der HP-Dampfleitung (47) und der CRH-Leitung (51) angeordnet ist, eine Betriebs-HRH-Umgehungsleitung (53), die zwischen der HRH-Leitung (49) und dem Kondensator (6) angeordnet ist, und eine Betriebs-LP-Umgehungsleitung (54), die zwischen der LP-Dampfleitung (41) und dem Kondensator (6) angeordnet ist, einschließen; und
wobei das Auslegen der dampfführenden Teile des HRSG (3), der Dampfleitungen (39-51) und der Betriebsumgehungsleitungen (52-54), die Umgehungsventile (55-57) einschließen, ein Bemessen und Anordnen mindestens der HP-Dampf-, IP-Dampf-, HRH-, CRH- und LP-Dampfleitung (47, 43, 49, 51, 41) und der HP-, HRH- und LP-Umgehungsleitung (52, 53, 54) für ein Reinigungskraftverhältnis CFR von mindestens 1,1 einschließt.

3. Verfahren nach Anspruch 2, ferner umfassend ein Bereitstellen von mindestens einigen des HP-, HRH- und LP-Umgehungsventils (55, 56, 57) in der Betriebs-HP-, HRH- und LP-Umgehungsleitung (52, 53, 54) mit modulierenden Opfergarnituren, die ausgelegt sind, um die Durchflusskoeffizientenfähigkeit (CV-Fähigkeit) der Umgehungsventile (55, 56, 57) zu erhöhen, um ein Reinigungskraftverhältnis CFR von mindestens 1,2 für einzelne HRSG-Anlagenkonfigurationen und mindestens 1,03 für mehrere HRSG-Anlagenkonfigurationen zu unterstützen.

4. Verfahren nach Anspruch 2 oder 3, ferner umfassend ein Positionieren von Abzweigverbindungen der Betriebs-HP-, HRH- und LP-Umgehungsleitung (52, 53, 54) so nah an dem Dampfturbinensystem (4) wie möglich, in unmittelbarer Nähe und direkt stromaufwärts von Steuer- und Absperrventilbaugruppen (63, 64, 65) der HP-, IP- und LP-Dampfturbine (17, 18, 19); und das Positionieren eines Rückschlagventils (66) auf der CRH-Leitung (51) und einer stromabwärtigen Verbindung der HP-Umgehungsleitung (52) zu der CRH-Leitung (51) so nahe an der HP-Dampfturbine (4) wie möglich.

5. Verfahren nach einem der Ansprüche 2 bis 4, ferner umfassend ein Installieren von Zieleinsätzen (67, 68), vorzugsweise in Form von hochpolierten Stahlplatten, in der HRH-Leitung (49) und der LP-Dampfleitung (41), wobei die Zieleinsätze (67, 68) konfiguriert und angeordnet sind, um eine Online-Zielinspektion und das Überwachen der Reinheit der dampfgeblasenen Dampfleitungen (39-57) bei den Dampftemperaturen und Druckbetriebsbedingungen während des Validierungsblasvorgangs zu ermöglichen.

6. Verfahren nach einem der vorstehenden Ansprüche, ferner umfassend das Installieren von Dampfdurchflussmessern in relevanten Abschnitten der dampfführenden Teile des HRSG (3), Dampfleitungen (39-51) und Betriebsumgehungsleitungen (52-54); und das Berechnen des CFR in den relevanten Abschnitten basierend auf Dampfdurchflussmessungen der Dampfdurchflussmesser während des Validierungsblasvorgangs.

7. Verfahren nach einem der vorstehenden Ansprüche, ferner umfassend das Bereitstellen von Inspektions-/Reinigungsöffnungen in nicht dampfgeblasenen Bereichen (69-72) der Dampfleitungen (47, 41, 49, 51); und Inspizieren und Reinigen der nicht dampfgeblasenen Bereiche (69-72), nachdem der Validierungsblasvorgang abgeschlossen wurde.

8. Verfahren nach einem der Ansprüche 2 bis 7, ferner umfassend das Bereitstellen von mindestens einigen der Abzweigverbindungen der HP-, HRH- und LP-Umgehungsleitung (52, 53, 54) mit einer T-Verbindung, die gerade zu der jeweiligen Umgehungsleitung und nicht gerade zu dem jeweiligen Dampfturbinenbereich (17, 18, 19) verläuft, um eine Ansammlung von Abrieb in toten Leitungen stromaufwärts des jeweiligen Dampfturbinenbereichs (17, 18, 19) zu reduzieren.

9. Verfahren nach einem der vorstehenden Ansprüche, wobei das Kombikraftwerk (1') eine Konfiguration mit mehreren Einheiten aufweist, umfassend ein einzelnes Dampfturbinensystem (4), eine erste Einheit (73), die einen ersten HRSG (3a) und ein erstes Gasturbinentriebwerk (2a) einschließt, und eine zweite Einheit (74), die einen zweiten HRSG (3b) und ein zweites Gasturbinentriebwerk (2b) einschließt, das Verfahren umfassend das Durchführen der Validierungsblasvorgänge unabhängig zwischen der ersten und der zweiten Einheit (73, 74).

10. Verfahren nach Anspruch 9, umfassend das Durchführen des Validierungsblasvorgangs für die erste und die zweite Einheit (73, 74) nacheinander und vorzugsweise das Durchführen der Validierungsblasvorgänge an einer der ersten und der zweiten Einheit (73, 74), während gleichzeitig tote Leitungen nach dem Validierungsblasvorgang in der anderen Einheit (74, 73) inspiziert und gereinigt werden.

11. Verfahren nach einem der Ansprüche 1 bis 8, wobei das Kombikraftwerk (1') eine Konfiguration mit mehreren Einheiten einschließt, umfassend ein einzelnes Dampfturbinensystem (4), eine erste Einheit (73), die einen ersten HRSG (3a) und ein erstes Gasturbinentriebwerk (2a) einschließt, und eine zweite Einheit (74) die einen zweiten HRSG (3b) und ein zweites Gasturbinentriebwerk (2b) einschließt, das Verfahren umfassend, während des Durchführens des Validierungsblasvorgangs in einer der ersten und der zweiten Einheit (73, 74), unter Verwendung mindestens einer Umgehungsleitung (52-54) und eines Umgehungsventils (55-57) in der anderen Einheit (74, 73), um den Validierungsdampf dadurch zu leiten.

12. Verfahren nach einem der Ansprüche 2 bis 8, wobei das Kombikraftwerk (1') eine Konfiguration mit mehreren Einheiten einschließt, umfassend ein einzelnes Dampfturbinensystem (4), eine erste Einheit (73), die einen ersten HRSG (3a) und ein erstes Gasturbinentriebwerk (2a) einschließt, und eine zweite Einheit (74) die einen zweiten HRSG (3b) und ein zweites Gasturbinentriebwerk (2b) einschließt, das Verfahren umfassend das Installieren einer temporären Überbrückung (78) von HP-Dampfturbinenventilen (63) der HP-Dampfturbine (17) zu einem Rückschlagventil (79) an einer gemeinsamen Kaltzwischenüberhitzungsleitung (CRH-Leitung) (81) und das Bemessen der HRH-Umgehungsventile (56a, 56b), um ein CFR von mindestens 1,1 an dem HP- und HRH-Dampfsystem zu ermöglichen.

13. Kombikraftwerk (1, 1'), umfassend:

ein Gasturbinentriebwerk (2) zum Erzeugen von Strom;
einen Abhitzerdampferzeuger HRSG (3), der mit dem Gasturbinentriebwerk (2) fluidisch verbunden ist, zum Empfangen von hochenergetischem Abgas, das bei der Stromerzeugung in dem Gasturbinentriebwerk (2) produziert wird, und der zum Produzieren von Dampf aus dem hochenergetischen Abgas konfiguriert ist;
ein Dampfturbinensystem (4), das über Dampfleitungen (39-51) mit dem HRSG (3) fluidisch verbunden ist, um Dampf zu empfangen, der in dem HRSG (3) produziert wird, und zum Produzieren von zusätzlicher Leistung aus dem Dampf konfiguriert ist;
einen Kondensator (6), der an das Dampfturbinensystem (4) gekoppelt ist, zum Kondensieren von verbrauchtem Dampf, der aus dem Dampfturbinensystem (4) ausgegeben wird, und ein Kondensatsystem (7) zum Zurückführen von Kondensat aus dem Kondensator (6) zu dem HRSG (3);
Betriebsumgehungsleitungen (52-54), die zwischen den Dampfleitungen (39-51) und dem Kondensator (6) fluidisch verbunden und angeordnet sind, um das Dampfturbinensystem (4) zu umgehen; und
ein Steuersystem (9) zum Steuern des normalen Betriebs des Gasturbinentriebwerks (2), des HRSG (3), des Dampfturbinensystems (4) und des Kondensators (6) zum Erzeugen von Strom unter variierenden Betriebsbedingungen, wobei das Steuersystem (9) ferner konfiguriert ist, um eine vorbetriebliche Reinigung von Wasser- und Dampfsystemen in dem Kombikraftwerk (1, 1') durchzuführen durch:

Zünden des Gasturbinentriebwerks (2) und Inbetriebnahme des Gasturbinentriebwerks (2);

während das Gasturbinentriebwerk (2) in Dienst gestellt wird, Durchführen eines Validierungsdampfblasvorgangs, der einen Dampfblasbetrieb einschließt, wobei Dampf in dem HRSG (3) erzeugt und zum Reinigen von dampfführenden Teilen des HRSG (3) und Dampfleitungen (39-51), die den HRSG (3) mit dem Dampfturbinensystem (4) verbinden, bei hohen Geschwindigkeiten, Temperaturen und Reinigungskraftverhältnisbedingungen durch einen Abschnitt eines geschlossenen Durchflusskreislaufs geblasen wird, wobei der Dampf geleitet wird, um das Dampfturbinensystem (4) über die Betriebsumgehungsleitungen (52-54) zu umgehen, ohne jegliche temporäre Rohrleitungen zu verwenden, und an den Kondensator (6) abgegeben wird; und

Überwachen und Validieren einer Reinheit von ausgewählten dampfgeblasenen Dampfleitungen (39-54);

wobei der Dampfblasvorgang durchgeführt wird, während das Gasturbinentriebwerk (2) bei Grundlast betrieben wird; und

wobei die dampfführenden Teile des HRSG (3), die Dampfleitungen (39-51) und die Betriebsumgehungsleitungen (52-54), die Umgehungsventile (55-57) einschließen, die dampfgeblasen werden sollen, jeweils für ein Reinigungskraftverhältnis *CFR* von mindestens 1,1 ausgelegt sind, wobei das Reinigungskraftverhältnis *CFR* berechnet wird als:

$$CFR = \left(\frac{Q_c}{Q_{max}}\right)^2 \times \frac{(PV)_c}{(PV)_{max}} \times \frac{P_{max}}{P_c} \quad ,$$

wobei $Q_c$ ein berechneter Durchfluss während der Reinigung ist, $Q_{max}$ ein maximaler Lastdurchfluss ist, $(PV)_c$ ein druckspezifisches Volumenprodukt während der Reinigung ist, $(PV)_{max}$ ein druckspezifisches Volumenprodukt bei maximalem Lastdurchfluss ist, $P_{max}$ ein Druck bei maximalem Lastdurchfluss ist, und $P_c$ ein Druck während der Reinigung ist.

14. Kombikraftwerk (1, 1') nach Anspruch 13, wobei das Kombikraftwerk (1, 1') wie in einem der vorstehenden Ansprüche beansprucht konfiguriert ist und das Steuersystem (9) konfiguriert ist, um den Validierungsdampfblasvorgang nach einem der vorstehenden Ansprüche durchzuführen.

**Revendications**

1. Procédé de nettoyage préopérationnel de systèmes d'eau et de vapeur dans une centrale électrique à cycle combiné (1, 1') comportant un moteur à turbine à gaz (2), un système de turbine à vapeur (4), un condenseur (6), et un générateur de vapeur à récupération de chaleur HRSG (3), le procédé comprenant :

la réalisation d'une opération de nettoyage chimique et de rinçage initiale préopérationnelle sur le système d'eau et de vapeur de la centrale électrique à cycle combiné (1, 1') finalement construite ;

l'allumage du moteur à turbine à gaz (2) et la mise en service du moteur à turbine à gaz (2) ;

tandis que le moteur à turbine à gaz (2) est en cours de mise en service, la réalisation d'une procédure de soufflage de vapeur de validation comportant une opération de soufflage de vapeur, dans lequel de la vapeur est générée dans le HRSG (3) et soufflée à des vitesses, des températures et des conditions de rapport de force de nettoyage élevées à travers une partie d'un circuit d'écoulement fermé pour nettoyer des parties transportant de la vapeur du HRSG (3) et des conduites de vapeur (39 à 51) raccordant le HRSG (3) au système de turbine à vapeur (4), dans lequel la vapeur est acheminée pour contourner le système de turbine à vapeur (4) par l'intermédiaire de conduites de contournement opérationnelles (52 à 54), sans utiliser de tuyauterie temporaire, et est évacuée vers le condenseur (6) ; et

la surveillance et la validation de propreté des conduites de vapeur (39 à 54) soufflées à la vapeur sélectionnées ;

dans lequel l'opération de soufflage de vapeur est réalisée, tandis que le moteur à turbine à gaz (2) est opéré à une charge de base ; et

dans lequel les parties transportant de la vapeur du HRSG (3), les conduites de vapeur (39 à 51) et les conduites de contournement opérationnelles (52 à 54) comportant des soupapes de contournement (55 à 57) devant être soufflées à la vapeur sont chacune conçues pour un rapport de force de nettoyage *CFR* d'au moins 1.1, dans lequel le rapport de force de nettoyage *CFR* est calculé comme suit :

$$CFR = \left(\frac{Q_c}{Q_{max}}\right)^2 \times \frac{(PV)_c}{(PV)_{max}} \times \frac{P_{max}}{P_c} \quad,$$

dans lequel $Q_c$ est un écoulement calculé pendant le nettoyage, $Q_{max}$ est un écoulement de charge maximal, $(PV)_c$ est un produit de volume spécifique à la pression pendant le nettoyage, $(PV)_{max}$ est un produit de volume spécifique à la pression au niveau de l'écoulement de charge maximal, $P_{max}$ est une pression au niveau d'un écoulement de charge maximale, et $P_c$ est une pression pendant le nettoyage.

2. Procédé selon la revendication 1, dans lequel le HRSG (3) a une pluralité d'étages de pression comportant un étage haute pression HP (21), un étage à pression intermédiaire IP (22), un étage basse pression LP (23), et un resurchauffeur (24) ;

dans lequel le système de turbine à vapeur (4) comporte une turbine à vapeur HP (17), une turbine à vapeur IP (18), et une turbine à vapeur LP (19) ;
dans lequel les conduites de vapeur (39-51) comportent une conduite de vapeur HP (47) pour l'alimentation en vapeur HP à partir de l'étage HP (21) du HRSG (3) vers la turbine à vapeur HP (17), une conduite de vapeur IP (43) raccordant l'étage IP (22) du HRSG (3) au resurchauffeur (24), une conduite de réchauffage à chaud HRH (49) pour l'alimentation en vapeur IP à partir du resurchauffeur (24) vers la turbine à vapeur IP (18), une conduite de réchauffage à froid CRH (51) pour la réception de vapeur HP usagée à partir de la turbine à vapeur HP (17) et l'alimentation en vapeur HP usagée du resurchauffeur (24), une conduite de contournement HP opérationnelle (52) agencée entre la conduite de vapeur HP (47) et la conduite CRH (51), une conduite de contournement HRH opérationnelle (53) agencée entre la conduite HRH (49) et le condenseur (6), et une conduite de contournement LP opérationnelle (54) agencée entre la conduite de vapeur LP (41) et le condenseur (6) ; et
dans lequel la conception des parties transportant de la vapeur du HRSG (3), des conduites de vapeur (39 à 51) et des conduites de contournement opérationnelles (52 à 54) comportant des soupapes de contournement (55 à 57) comporte le dimensionnement et l'agencement d'au moins les conduites de vapeur HP, de vapeur IP, HRH, CRH et LP (47, 43, 49, 51, 41) et les conduites de contournement HP, HRH et LP (52, 53, 54) pour un rapport de force de nettoyage CFR d'au moins 1.1.

3. Procédé selon la revendication 2, comprenant en outre la fourniture d'au moins certaines des soupapes de contournement HP, HRH et LP (55, 56, 57) dans les conduites de contournement HP, HRH et LP opérationnelles (52, 53, 54) avec des garnitures sacrificielles modulantes conçues pour augmenter la capacité CV de coefficient d'écoulement des soupapes de contournement (55, 56, 57) de manière à supporter un rapport de force de nettoyage CFR d'au moins 1.2 pour des configurations de centrale à HRSG unique et d'au moins 1.03 pour de configurations de centrale à HRSG multiples.

4. Procédé selon la revendication 2 ou 3, comprenant en outre le positionnement de raccordements de reprise des conduites de contournement HP, HRH et LP opérationnelles (52, 53, 54) aussi près que possible du système de turbine à vapeur (4), à proximité immédiate et juste en amont d'ensembles de soupapes de commande et d'isolement (63, 64, 65) des turbines à vapeur HP, IP et LP (17, 18, 19) ; et le positionnement d'une soupape antiretour (66) sur la conduite CRH (51) et un raccordement en aval de la conduite de contournement HP (52) à la conduite CRH (51) aussi près que possible de la turbine à vapeur HP (4).

5. Procédé selon l'une quelconque des revendications 2 à 4, comprenant en outre l'installation d'inserts cibles (67, 68), de préférence sous la forme de plaques d'acier hautement polies, dans la conduite HRH (49) et la conduite de vapeur LP (41), les inserts cibles (67, 68) étant conçus et agencés pour permettre une inspection cible en ligne et une surveillance de propreté des conduites de vapeur (39 à 57) soufflées à la vapeur aux conditions opérationnelles de pression et températures de vapeur pendant la procédure de soufflage de validation.

6. Procédé selon l'une quelconque des revendications précédentes, comprenant en outre l'installation de compteurs d'écoulement de vapeur dans des parties pertinentes des parties transportant de la vapeur du HRSG (3), des conduites de vapeur (39-51) et des conduites de contournement opérationnelles (52 à 54) ; et le calcul du CFR dans les parties pertinentes en fonction de mesures d'écoulement de vapeur des compteurs d'écoulement de vapeur pendant la procédure de soufflage de validation.

7. Procédé selon l'une quelconque des revendications précédentes, comprenant en outre la fourniture d'orifices d'inspection/nettoyage dans des sections non soufflées à la vapeur (69 à 72) des conduites de vapeur (47, 41, 49, 51) ; et l'inspection et le nettoyage des sections non soufflées à la vapeur (69 à 72) après que la procédure de soufflage de validation est achevée.

8. Procédé selon l'une quelconque des revendications 2 à 7, comprenant en outre la fourniture d'au moins certains des raccordements de reprise des conduites de contournement HP, HRH et LP (52, 53, 54) d'un raccordement en T qui est droit vers la conduite de contournement respective et non droit vers la section de turbine à vapeur (17, 18, 19) respective pour réduire l'accumulation de débris dans les bras morts en amont de la section de turbine à vapeur (17, 18, 19) respective.

9. Procédé selon l'une quelconque des revendications précédentes, dans lequel la centrale électrique à cycle combiné (1') a une configuration multi-unités comprenant un système de turbine à vapeur (4) unique, une première unité (73) comportant un premier HRSG (3a) et un premier moteur à turbine à gaz (2a), et une seconde unité (74) comportant un second HRSG (3b) et un second moteur à turbine à gaz (2b), le procédé comprenant la réalisation des procédures de soufflage de validation indépendamment entre les première et seconde unités (73, 74).

10. Procédé selon la revendication 9, comprenant la réalisation des procédures de soufflage de validation pour les première et seconde unités (73, 74) l'une après l'autre et de préférence la réalisation de la procédure de soufflage de validation sur l'une des première et seconde unités (73, 74), tout en inspectant et nettoyant simultanément les bras morts suivant la procédure de soufflage de validation dans l'autre unité (74, 73).

11. Procédé selon l'une quelconque des revendications 1 à 8, dans lequel la centrale électrique à cycle combiné (1') comporte une configuration multi-unités comprenant un système de turbine à vapeur (4) unique, une première unité (73) comportant un premier HRSG (3a) et un premier moteur à turbine à gaz (2a), et une seconde unité (74) comportant un second HRSG (3b) et un second moteur à turbine à gaz (2b), le procédé comprenant, tout en réalisant la procédure de soufflage de validation dans l'une des première et seconde unités (73, 74), l'utilisation d'au moins une conduite de contournement (52 à 54) et d'une soupape de contournement (55 à 57) dans l'autre unité (74, 73) pour acheminer la vapeur de validation à travers ceux-ci.

12. Procédé selon l'une quelconque des revendications 2 à 8, dans lequel la centrale électrique à cycle combiné (1') comporte une configuration multi-unités comprenant un système de turbine à vapeur (4) unique, une première unité (73) comportant un premier HRSG (3a) et un premier moteur à turbine à gaz (2a), et une seconde unité (74) comportant un second HRSG (3b) et un second moteur à turbine à gaz (2b), le procédé comprenant l'installation d'un cavalier temporaire (78) depuis des soupapes de turbine à vapeur HP (63) de la turbine à vapeur HP (17) vers une soupape antiretour (79) sur une conduite de réchauffage à froid CRH (81) commune et le dimensionnement des soupapes de contournement HRH (56a, 56b) pour permettre un CFR d'au moins 1.1 sur les systèmes de vapeur HP et HRH.

13. Centrale électrique à cycle combiné (1, 1'), comprenant :

un moteur à turbine à gaz (2) pour générer de l'électricité ;
un générateur de vapeur à récupération de chaleur HRSG (3) raccordé fluidiquement au moteur à turbine à gaz (2) pour la réception de gaz d'échappement à haute énergie produits à partir de la génération d'électricité dans le moteur à turbine à gaz (2) et conçu pour produire de la vapeur à partir des gaz d'échappement à haute énergie ;
un système de turbine à vapeur (4) raccordé fluidiquement au HRSG (3) par l'intermédiaire de conduites de vapeur (39-51) pour la réception de vapeur produite dans le HRSG (3) et conçu pour produire de l'électricité supplémentaire à partir de la vapeur ;
un condenseur (6) accouplé au système de turbine à vapeur (4) pour la condensation de la vapeur usagée sortie du système de turbine à vapeur (4) et un système de condensat (7) pour le renvoi du condensat du condenseur (6) au HRSG (3) ;
des conduites de contournement opérationnelles (52 à 54) raccordées fluidiquement entre les conduites de vapeur (39-51) et le condenseur (6) et agencées pour contourner le système de turbine à vapeur (4) ; et
un système de commande (9) pour la commande de l'opération normale du moteur à turbine à gaz (2), du HRSG (3), du système de turbine à vapeur (4) et du condenseur (6) pour la génération d'électricité dans des conditions opérationnelles variables, le système de commande (9) étant en outre configuré pour réaliser un nettoyage préopérationnel des systèmes d'eau et de vapeur dans la centrale électrique à cycle combiné (1, 1') par :

l'allumage du moteur à turbine à gaz (2) et la mise en service du moteur à turbine à gaz (2) ;
tandis que le moteur à turbine à gaz (2) est en cours de mise en service, la réalisation d'une procédure de soufflage de vapeur de validation comportant une opération de soufflage de vapeur, dans laquelle de la vapeur est générée dans le HRSG (3) et soufflée à des vitesses, des températures et des conditions de rapport de force de nettoyage élevées à travers une partie d'un circuit d'écoulement fermé pour nettoyer les parties transportant de la vapeur du HRSG (3) et des conduites de vapeur (39 à 51) raccordant le HRSG (3) au système de turbine à vapeur (4), dans laquelle la vapeur est acheminée pour contourner le système de turbine à vapeur (4) par l'intermédiaire des conduites de contournement opérationnelles (52 à 54), sans utiliser de tuyauterie temporaire, et est évacuée vers le condenseur (6) ; et

la surveillance et la validation de propreté des conduites de vapeur (39 à 54) soufflées à la vapeur sélectionnées ;

dans lequel l'opération de soufflage de vapeur est réalisée, tandis que le moteur à turbine à gaz (2) est opéré à une charge de base ; et

dans lequel les parties transportant de la vapeur du HRSG (3), les conduites de vapeur (39 à 51) et les conduites de contournement opérationnelles (52 à 54) comportant des soupapes de contournement (55 à 57) devant être soufflées à la vapeur sont chacune conçues pour un rapport de force de nettoyage *CFR* d'au moins 1.1, dans lequel le rapport de force de nettoyage *CFR* est calculé comme suit :

$$CFR = \left(\frac{Q_c}{Q_{max}}\right)^2 \times \frac{(PV)_c}{(PV)_{max}} \times \frac{P_{max}}{P_c},$$

dans laquelle $Q_c$ est un écoulement calculé pendant le nettoyage, $Q_{max}$ est un écoulement de charge maximal, $(PV)_C$ est un produit de volume spécifique à la pression pendant le nettoyage, $(PV)_{max}$ est un produit de volume spécifique à la pression au niveau de l'écoulement de charge maximal, $P_{max}$ est une pression au niveau d'un écoulement de charge maximale, et $P_c$ est une pression pendant le nettoyage.

14. Centrale électrique à cycle combiné (1, 1') selon la revendication 13, dans laquelle la centrale électrique à cycle combiné (1, 1') est conçue selon l'une quelconque des revendications précédentes et le système de commande (9) est conçu pour réaliser la procédure de validation de soufflage de vapeur selon l'une quelconque des revendications précédentes.

Fig. 1

Fig. 2

Fig. 3

Fig. 4

EP 4 571 184 B1

Fig. 5

**EP 4 571 184 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090107532 A1
- US 10612771 B2
- US 2020173651 A1